(19) Europäisches Patentamt
European Patent Office
Office européen des brevets

(11) **EP 3 007 439 B1**

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(51) Int Cl.:
***H04N 9/31*** *(2006.01)*

(21) Anmeldenummer: **15196445.9**

(22) Anmeldetag: **09.05.2014**

(54) **MULTIAPERTUR-PROJEKTIONSDISPLAY UND EINZELBILDERZEUGER FÜR EIN SOLCHES**

MULTI-APERTURE PROJECTION DISPLAY AND SINGLE IMAGE GENERATOR FOR SAME

AFFICHAGE DE PROJECTION À PLUSIEURS OUVERTURES ET GÉNÉRATEUR D'IMAGE UNIQUE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.05.2013 DE 102013208625**

(43) Veröffentlichungstag der Anmeldung:
**13.04.2016 Patentblatt 2016/15**

(62) Dokumentnummer(n) der früheren Anmeldung(en) nach Art. 76 EPÜ:
**14726904.7 / 2 984 819**

(73) Patentinhaber: **Fraunhofer-Gesellschaft zur Förderung der angewandten Forschung e.V.
80686 München (DE)**

(72) Erfinder:
• **Sieler, Marcel**
**07745 Jena (DE)**
• **Schreiber, Peter**
**07749 Jena (DE)**
• **Riedel, Alf**
**07749 Jena (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
**EP-A2- 1 484 929      DE-A1-102009 024 894
US-A1- 2010 110 385   US-A1- 2012 256 824**

**Beschreibung**

Die vorliegende Erfindung bezieht sich auf Multiapertur-Projektionsdisplays und die Einzelbilderzeugung für ein solches.

Zur Abbildung von unterschiedlichen Mustern auf verschiedene Geometrien bzw. Projektionsabstände gibt es bisher keine zufriedenstellende technische Lösung. Manche Lösungen sehen vor, dass diese Abbildungseigenschaften mit einem Wechsel der Objektstrukturen, wie z.B. in Form eines digitalen Bildgebers, oder durch eine mechanische Manipulation der abbildenden Optik gemäß der Abbildungsgleichung, wie z.B. durch Änderung der Brennweite und/oder Schnittweite, ermöglicht werden. Solche Lösungen sind allerdings aufwendig.

Ein Spezialfall der soeben beschriebenen Abbildungseigenschaften stellt die Erhaltung eines festen Lichtmusters über einen definierten Distanzbereich dar. Diese Eigenschaft ist äquivalent zu dem Begriff der Schärfentiefe in der Optik.

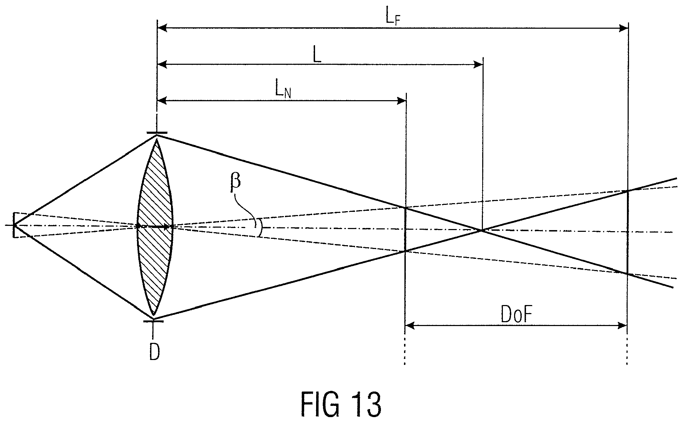

Die schirmseitige Schärfentiefe (depth of focus = DoF) eines Projektors ergibt sich gemäß geometrischer Überlegungen aus der Projektionsdistanz L, der Pupillenausdehnung D und dem akzeptablen Unschärfewinkel $\beta$ gemäß Fig. 13 durch folgende Beziehung (W.J. Smith, Modern Optical Engineering (McGraw-Hill, 2007)).

$$L_{N,F} = \frac{D \cdot L}{D \pm 2L \cdot \tan\left(\frac{\beta}{2}\right)} \approx \frac{D \cdot L}{D \pm L \cdot \beta} \qquad (1)$$

$$DoF = L_F - L_N \approx \frac{2DL^2\beta}{D^2 - L^2\beta^2} \qquad (2)$$

Somit ist die Erhöhung der Schärfentiefe für einen gegebenen Abstand L und einen akzeptierten Unschärfewinkel $\beta$ gemäß (1) und (2) nur durch Verkleinerung der Pupillengröße D möglich. Dies geht einher mit einem Helligkeitsverlust der Projektion, da der transmittierte Lichtstrom proportional zum akzeptierten Raumwinkel jedes Objektpunktes in der Ebene ist und deshalb bei Verkleinerung der Pupillenfläche $D^2$ ebenfalls verringert wird. (W.J. Smith, Modern Optical Engineering (McGraw-Hill, 2007)).

Ein alternativer Ansatz zur Erzielung einer großen Projektor-Schärfentiefe besteht in der Verwendung von laserbeleuchteten MEMS-Spiegeln, welche einen scannenden Bildaufbau verwenden. Aufgrund der kleinen Spiegelfläche haben diese zwar inhärent eine große Schärfentiefe, sie benötigen allerdings für einen guten Bildeindruck sowohl kohärente Lichtquellen als auch schnelle, bewegliche mechanische Bauteile (MEMS-Spiegel), was ihre Robustheit und potentielle Anwendungsbereiche einschränkt. Des Weiteren kann das auf diese Art erzeugte Projektionsbild durch kohärente Effekte, wie z.B. Speckle, negativ beeinflusst werden, solange keine weiteren technischen Maßnahmen zu deren Minimierung ergriffen werden.

Die US 2012/0256824 A1 offenbart einen weiteren Ansatz. Die darin beschriebene Vorrichtung ist ausgebildet, um ein Objekt, wie z.B. eine menschliche Hand, zu erkennen, wenn sich diese zwischen dem Projektor und der Projektionsfläche befindet. In diesem Fall bestimmt die Vorrichtung einen Bereich dieses Objekts und generiert ein modifiziertes Bild basierend auf dem Bereich des Objekts. Bildinhalte können hierbei teilweise entfernt und durch andere Bildinhalte ersetzt werden.

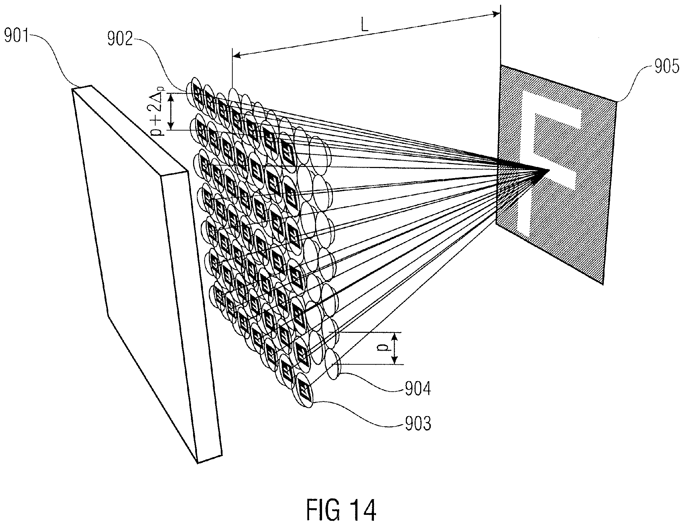

Fig. 14 zeigt einen weiteren Ansatz, nämlich eine Multiapertur-Anordnung von Mikroprojektoren, d.h. einen Array-Projektor, welcher beispielsweise in DE102009024894A1 beschrieben wird. Der dort zum Einsatz kommende Multiapertur-Ansatz ermöglicht die Entkopplung der Systembaulänge des Projektionssystems vom erreichbaren Lichtstrom, was kompakte und gleichzeitig helle Projektionssysteme ermöglicht. Bisherige Veröffentlichungen zu diesem Optikansatz beschreiben eine regelmäßige, zweidimensionale Anordnung von Mikroprojektoren, jeweils bestehend aus einer Feldlinse 902, einer/m Objektstruktur/Dia 903 und einer Projektionsoptik 904. Die Gesamtanordnung wird von einer ausgedehnten bzw. flächigen Lichtquelle 901 hinterleuchtet. Das projizierte Gesamtbild ergibt sich aus der scharfen Überlagerung aller Einzelbilder in einer eindeutigen Projektionsdistanz L. Dies erfolgt durch eine wohl definierte Anordnung der Einzeldias 903 bezüglich den korrespondierenden Projektionslinsen 904 gemäß Gleichung (3).

$$L = s \cdot \frac{p}{\Delta p} \qquad , \qquad s = \frac{F\,L}{L-F} \qquad (3)$$

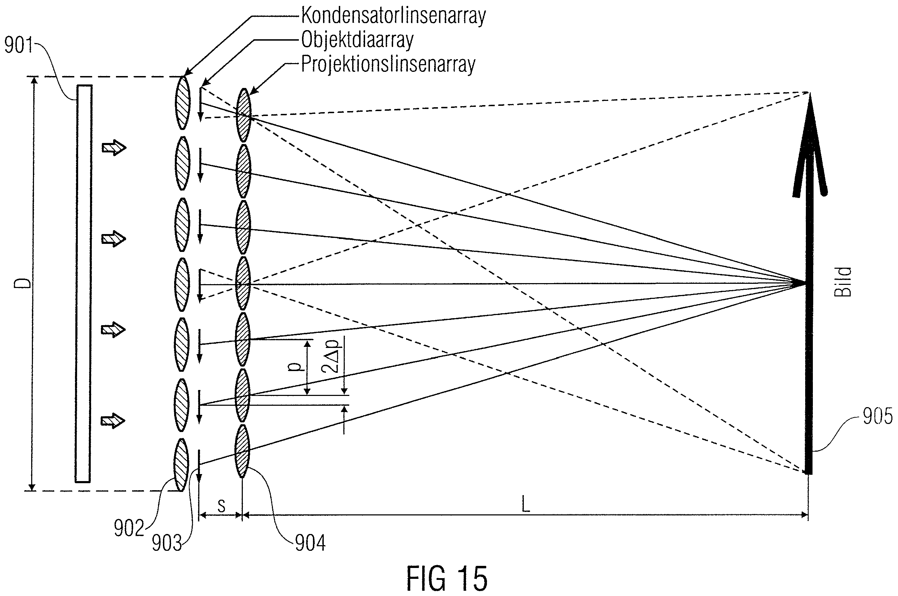

Hierbei bedeutet p den Mittenaperturabstand zwischen den einzelnen Projektionslinsen 904 und p + $\Delta$p den Mittenabstand zwischen den Objektstrukturen bzw. Einzelbildern 903. Für die üblichen Größen sei noch auf Fig. 15 verwiesen, woraus hervorgeht, dass s die Bilddistanz, d.h. die Distanz zwischen Einzelbild 903 und jeweiliger Projektionsoptik 904 bedeutet und F die Brennweite der Projektionsoptiken 904 ist.

Aufgrund der kleinen Aperturen jeder Einzelprojektionslinse 904 ist die Schärfentiefe der Einzelprojektoren sehr groß (vgl. Gleichung (2)). Die hyperfokale Distanz der Einzelprojektionen liegt dabei typischerweise deutlich unter dem Abstand L.

Die Solldistanz, in welcher das Gesamtbild durch Superposition aller Einzelbilder entsteht, wird maßgeblich bestimmt durch die Brennweite/Schnittweite der Einzelprojektoren 904 und der Mittenabstanddifferenz $\Delta p$ der Objektstrukturen 903 bezüglich des korrespondierenden Projektionslinsenarrays von Linsen 904 (vgl. Marcel Sieler, Peter Schreiber, Peter Dannberg, Andreas Bräuer, and Andreas Tünnermann, "Ultraslim fixed pattern projectors with inherent homogenization of illumination," Appl. Opt. 51, 64-74 (2012)).

Bei Gleichung 3 entspricht also F der Brennweite und p dem Abstand bzw. Mittenabstand der Projektorlinsen 904 zueinander und $\Delta p$ der Mittenabstanddifferenz zwischen den Dias 902 und Linsen 904, wobei s die Schnittweite beschreibt, welche sich gemäß der paraxialen Abbildungsgleichung durch die Kombination von L und F ergibt. Aus Gleichung 3 ergibt sich, dass die Schärfentiefe des aus der Überlagerung der einzelnen Mikroprojektoren projizierten Gesamtbildes 905 unter Vernachlässigung geometrischer Aberrationen der eines klassischen Einkanalprojektes mit einer Pupillengröße entspricht, die der lateralen Ausdehnung D des Mikroprojektorarrays entspricht (vgl. Marcel Sieler, Peter Schreiber, Peter Dannberg, Andreas Bräuer, and Andreas Tünnermann, "Ultraslim fixed pattern projectors with inherent homogenization of illumination," Appl. Opt. 51, 64-74 (2012)).

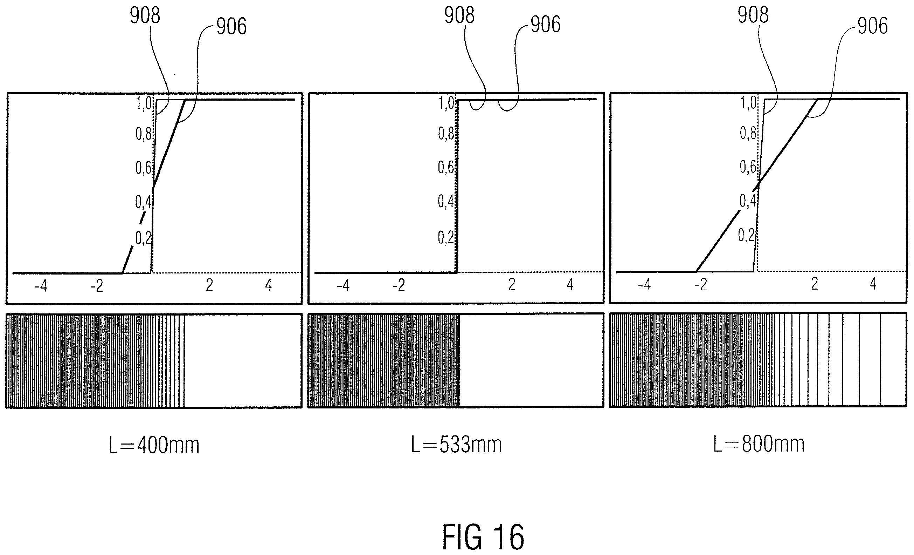

Fig. 16 zeigt beispielsweise das Unschärfeverhalten eines konventionellen Einkanalprojektors, wie er exemplarisch in Fig. 13 gezeigt ist, nämlich bei Bezugszeichen 906, und einer einzelnen Projektorlinse und eines Array-Projektors gemäß Fig. 14 und Fig. 15 bei 908. Alle Systeme sind auf einen Sollabstand von 533 mm fokussiert. Das Unschärfeverhalten eines einzelnen Projektionskanals und eines Array-Projektors entsprechen einander insoweit, dass sie gemeinsam durch die Kurve 908 repräsentiert werden. Das bedeutet, das Unschärfeverhalten eines einkanaligen Projektors und eines herkömmlichen Array-Projektors gleicher Pupillengröße stimmen unter Vernachlässigung weiterer Aberrationen und Vignettierungseffekte durch Totzonen miteinander überein.

Es wäre nun wünschenswert, ein System an der Hand zu haben, dass es ermöglicht, unterschiedliche Bilder auf unterschiedliche Projektionsabstände bzw. Geometrien auf objektivere Art und Weise anzuzeigen.

Die Aufgabe der vorliegenden Erfindung besteht darin, ein Konzept zu schaffen, dass dies ermöglicht.

Diese Aufgabe wird durch den Gegenstand der anhängigen unabhängigen Patentansprüche gelöst.

Der Kerngedanke der vorliegenden Erfindung besteht darin, erkannt zu haben, dass es möglich ist, mit einem Multiapertur-Projektionsdisplay zu projizierende Bilder in unterschiedlichen Projektionsentfernungen zu erzeugen, und zwar statisch bzw. ohne jedwede Umstellung - weder mechanischer noch bildgeberseitiger Art -, wenn die Einzelbilder des Multiapertur-Projektionsdisplays geeignet entworfen werden, nämlich indem vorläufige Einzelbilder für die Projektionskanäle des Multiapertur-Projektionsdisplays, die für jedes der zumindest zwei zu projizierenden Bilder vorgesehen sind, projektionskanalweise zu den eigentlichen bzw. endgültigen Einzelbildern kombiniert werden.

Gemäß Ausführungsbeispielen wird dies so durchgeführt, dass für jeden Projektionskanal das endgültige Einzelbild an Orten, an denen sich ungleich-null-wertige, wie z.B. transmissive oder leuchtende Abschnitte der für die zu projizierenden Bilder vorgesehenen vorläufigen Einzelbilder des jeweiligen Projektionskanals zumindest teilweise befinden, also der nicht-Nullwertige Abschnitt zumindest eines zu projizierenden Bildes, aber nicht alle überlagern, mehr gegenüber einer positiven Überlagerung der vorläufigen Einzelbilder des jeweiligen Projektionskanals abgedunkelt ist als an Orten, an denen sich die ungleich-null-wertigen Abschnitte der für die zu projizierenden Bilder berechneten vorläufigen Einzelbilder des jeweiligen Projektionskanals alle überlagern. Beispielsweise wird bei der Kombination eine logische Verknüpfungsoperation zwischen den für die projizierenden Bilder vorgesehenen vorläufigen Einzelbildern verwendet, wie z.B. eine logische UND- oder eine ODER-Verknüpfung.

Gemäß einem Ausführungsbeispiel wird somit zur Einzelbilderzeugung für ein Multiapertur-Projektionsdisplay mit einer Mehrzahl von Projektionskanälen auf Bilddaten zurückgegriffen, die zumindest zwei zu projizierende Bilder in unterschiedlichen Projektionsentfernungen darstellen, und für jedes der zumindest zwei zu projizierenden Bilder wird pro Projektionskanal des Multiapertur-Projektionsdisplays ein vorläufiges Einzelbild berechnet, wobei ein Kombinierer ausgebildet ist, um für jeden Projektionskanal die für die zumindest zwei zu projizierenden Bilder berechneten vorläufigen Einzelbilder des jeweiligen Projektionskanals zu einem endgültigen Einzelbild für den jeweiligen Projektionskanal zu kombinieren.

Ausführungsbeispiele schaffen aber auch ein Multiapertur-Projektionsdisplay, wobei die Einzelbilder der Projektionskanäle derart ausgebildet sind, dass sich die Abbildungen der Einzelbilder der Projektionskanäle an zumindest zwei unterschiedlichen Projektionsentfernungen zu jeweils einem projizierten Bild überlagern, wobei die Einzelbilder an Orten, an denen sich nicht-null-wertige Abschnitte der projizierten Bilder bei einer Rückprojektion über die Optiken der Projektionskanäle in die Objektebene der Optiken der Projektionskanäle gegenseitig zumindest teilweise befinden, aber nicht alle überlagern, gegenüber einer positiven Überlagerung mehr abgedunkelt sind als an Orten, an denen sich die nicht-null-wertigen Abschnitte der projizierten Bilder bei Rückprojektion in die Optiken der Projektionskanäle in die Objektebene der Optiken der Projektionskanäle gegenseitig alle überlagern.

Vorteilhafte Ausgestaltungen der vorliegenden Erfindung sind Gegenstand der abhängigen Patentansprüche, wobei bevorzugte Ausführungsbeispiele der vorliegenden Anmeldung nachfolgend Bezug nehmend auf die Figuren näher erläutert werden, unter welchen,

Fig. 1     eine schematische dreidimensionale Ansicht eines Multiapertur-Projektionsdisplays gemäß einem Ausführungsbeispiel mit reeller Projektion zeigt;

Fig. 2     eine Draufsicht auf das Multiapertur-Projektionsdisplay von Fig. 1 zur Veranschaulichung relativer Positionen von Optiken und Einzelbildern der einzelnen Kanäle gemäß einem exemplarischen Beispiel zeigt;

Fig. 3     schematisch eine Rückprojektion zweier zu projizierender Bilder in die Objektebene der Optiken der Kanäle zeigt und eine UND-Verknüpfung der transmissiven Flächen der Maskendaten bzw. vorläufigen Einzelbilder veranschaulicht, wobei außen liegende Objektstrukturen in den zu projizierenden Bildern einer kürzeren Projektionsdistanz zugeordnet sind;

Fig. 4a    eine Draufsicht auf die aus der UND-Verknüpfung von Fig. 3 resultierende Objektstruktur, die die endgültigen Einzelbilder darstellt;

Fig. 4b    den projizierten Anteil des Kanals 12' aus Fig. 4a am projizierten Bild, wie es sich an der kürzeren Projektionsentfernung mit den endgültigen Einzelbildern ergibt, gemäß Fig. 4a zeigt;

Fig. 4c    den projizierten Anteil des Kanals 12" aus Fig. 4a am projizierten Bild, wie es sich an der kürzeren Projektionsentfernung mit den endgültigen Einzelbildern ergibt, gemäß Fig. 4a zeigt;

Fig. 4d    den projizierten Anteil des Kanals 12' aus Fig. 4a am projizierten Bild, wie es sich an der längeren Projektionsentfernung mit den endgültigen Einzelbildern ergibt, gemäß Fig. 4a zeigt;

Fig. 4e    den projizierten Anteil des Kanals 12" aus Fig. 4a am projizierten Bild, wie es sich an der längeren Projektionsentfernung mit den endgültigen Einzelbildern ergibt, gemäß Fig. 4a zeigt;

Fig. 5     schematisch ein Array quadratisch angeordneter Projektorlinsen zeigt sowie eine in der Beschreibung verwendete Notation zur Indexierung der Kanäle veranschaulicht;

Fig. 6     eine dreidimensionale Ansicht einer exemplarischen Lagebeziehung zwischen dem Multiapertur-Projektionsdisplay von Fig. 1 und exemplarischen projizierten Bildern zeigt, die zu einer Schärfentiefenerweiterung (EDoF) führen, wobei insbesondere die Solllichtverteilungen in beiden Sollabständen in Form von hier exemplarisch einem Rechteck dargestellt sind, das sich gemäß dem Abbildungsmaßstab vergrößert;

Fig. 7     eine schematische Ansicht, die veranschaulicht, wie sich durch Objektstrukturen in dem Projektorkanal (2, 4) von Fig. 5 in Form der Muster $L_1(1)$ und Muster $L_2(2)$ durch eine Schnittmengenüberprüfung ein endgültiges Einzelbild mit der Fläche Muster$_{Schnitt}$ ergibt;

Fig. 8     eine Gegenüberstellung der Abbildungseigenschaften einer Hell-Dunkel-Kante durch einen konventionellen Projektor und einen Array-Projektor mit EDoF an unterschiedlichen Projektionsdistanzen darstellt;

Fig. 9     schematisch das Kantenausdehnungsverhalten eines konventionellen Projektors und eines Array-Projektors mit EDoF darstellt;

Fig. 10    schematisch ein Blockdiagramm eines Einzelbilderzeugers gemäß einem Ausführungsbeispiel zeigt;

Fig. 11    eine schematische Raumansicht eines Multiapertur-Projektionsdisplays in Form eines Einspiegelsystems zur Einspiegelung virtueller Projektionsbilder gemäß einem Ausführungsbeispiel zeigt;

Fig. 12    eine Schnittansicht eines Multiapertur-Projektionsdisplays zur Nah-Augen-Anwendung und Einblendung virtueller Bildprojektionen in ein Auge gemäß einem Ausführungsbeispiel darstellt;

Fig. 13    schematisch einen Einzelapertur-Projektor und eine Prinzipskizze zur Verdeutlichung von dessen Schärfentiefe zeigt;

Fig. 14     schematisch eine dreidimensionale Ansicht eines Array-Projektors mit regelmäßig angeordneten Projektionskanälen, hier exemplarisch eine Anordnung aus 7x7 quadratisch dicht gepackten Einzelprojektoren mit flächenhafter Hinterleuchtung, zeigt;

Fig. 15     einen schematischen Querschnitt der Anordnung von Fig. 14 zur Veranschaulichung eines 2D-Layouts zur Bestimmung der Entfernung, in der durch Überlagerung der Projektionskanäle ein scharfes Bild entsteht, zeigt; und

Fig. 16     das Unschärfeverhalten eines konventionellen Einkanalprojektors, eines einzelnen Projektionskanals und eines Array-Projektors ohne Schärfentiefenerweiterung zeigt.

Bevor im Folgenden konkrete Ausführungsbeispiele der vorliegenden Anmeldung beschrieben werden, soll zunächst einmal der Versuch unternommen werden, den den nachfolgend beschriebenen Ausführungsbeispielen zugrunde liegenden Grundgedanken zu motivieren. Die nachfolgend beschriebenen Ausführungsbeispiele sind beispielsweise dafür geeignet, eine Abbildung mehrerer Lichtmuster auf verschiedene Geometrien bzw. Solldistanzen zu ermöglichen. Ein Spezialfall hiervon stellt die Erhaltung eines eindeutigen Lichtmusters gemäß Abbildungsmaßstab über einen vergrößerten Distanzbereich dar. Hierbei kann man von einer Erweiterung der Schärfentiefe reden. Zur Verdeutlichung der den nachfolgend beschriebenen Ausführungsbeispielen zugrunde liegenden Prinzipien wird zunächst auf diesen Spezialfall eingegangen.

Grundlage bilden die Abbildungseigenschaften eines Array-Projektors bzw. eines Multiapertur-Projektionsdisplays. Aufgrund der zweidimensionalen Anordnung von Mikroprojektoren bzw. Projektionsoptiken, welche typischerweise jeweils eine Apertur $D_{Einzel}$ < 1 mm besitzen, ergibt sich für den Einzelprojektor, d.h. einen einzelnen Projektionskanal, eine gegenüber einem einkanaligen Projektor mit einer zu dem Array äquivalenter Gesamtapertur vergleichsweise sehr große Schärfentiefe. Für typische Projektionsdistanzen von > 300 mm liegt eine hyperfokale Abbildung jedes Projektionskanals vor, d.h. es existiert keine reelle Femdistanz $L_F$ des Schärfentiefenbereichs.

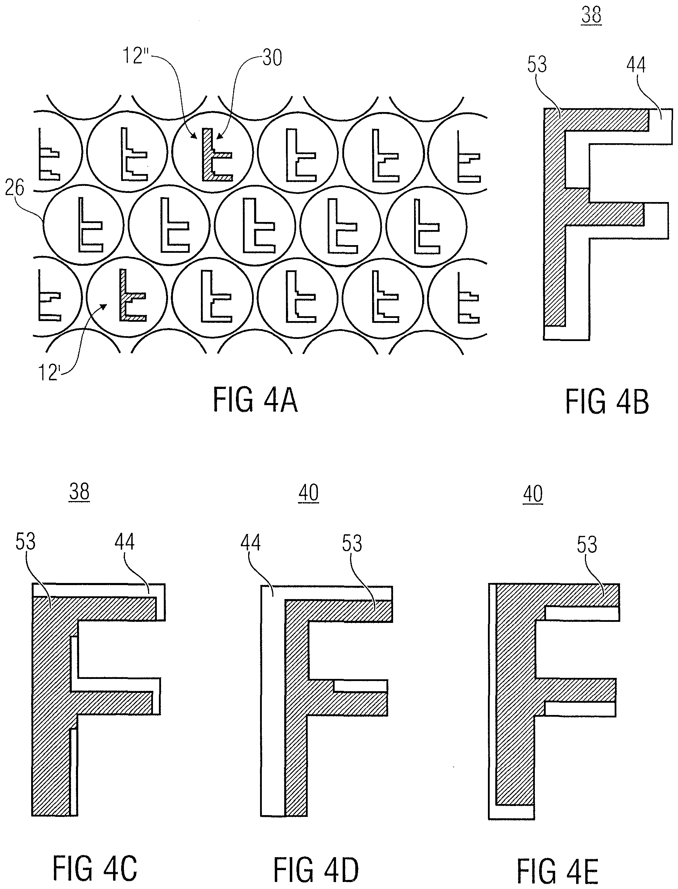

Ansatzpunkt nachfolgender Ausführungsbeispiele ist nun die Erzeugung spezieller Objektstrukturen bzw. Einzelbilder innerhalb der Objektebene der Projektionsoptiken, deren bildseitige, durch die optischen Abbildungen aller Projektionsoptiken entstehende Überlagerung in dem angestrebten Schärfentiefenbereich konstruktiv zu dem Gesamtbild beitragen. Als konkretes Beispiel betrachte man ein Mehrkanal-Projektionsdisplay gemäß Fig. 4B. Das Projektionsdisplay sei exemplarisch auf eine Schirmentfernung von 400 mm eingestellt. So eingestellt besitzt jeder Projektionskanal einen Schärfentiefenbereich, der sich von beispielsweise 200 mm bis unendlich erstreckt. Das gesamte Array besitzt, wie es im Vorhergehenden ausgeführt wurde, analog zu einem Einzelapertur-Projektor mit Eintrittspupillengröße D (vgl. Fig. 15), einer Ausdehnung des gesamten Optikarrays, lediglich eine Schärfentiefe, die sich von 350 .... 450 mm erstreckt. Ziel wäre es, die Schärfentiefe der Einzelkanäle besser auszunutzen und dabei aber trotzdem die Helligkeit eines Mehrkanal-Projektionsdisplays zu erhalten. Die nachfolgenden Ausführungsbeispiele verfolgen nun folgenden Ansatz: Wenn man sich ein zu projizierendes Bild innerhalb des anvisierten Schärfentiefenbereichs betrachtet und für jede Projektionsentfernung innerhalb des Schärfentiefenbereichs rückverfolgt, welcher Objektstruktur es in der Objektebene der Projektionskanäle entspricht, beobachtet man, dass es in den Objektebenen der Projektionskanäle Bereiche gibt, die in jedweder Entfernung innerhalb des anvisierten Schärfentiefenbereichs zum zu projizierenden Bild beitragen. Die nachfolgenden Ausführungsbeispiele nutzen dies aus, indem jeder kanalspezifische Beitrag zum Gesamtbild derart manipuliert wird, dass die Bildinformation für das zu projizierende Bild für alle Wunschentfernungen innerhalb des Schärfentiefenbereichs erhalten bleibt. Wie es nachfolgend erläutert werden wird, werden dazu Orte in den Objektebenen der Projektionskanäle, an denen sich die Objektstrukturen der Rückprojektion des zu projizierenden Bildes an den variierenden Entfernungen innerhalb des Schärfetiefebereichs nur teilweise befinden, d.h. nicht alle überlappen, abgedunkelt oder gar entfernt, d.h. beispielsweise die Schattenmaske dort abgeschattet, so dass, wie es nachfolgende Ausführungen zeigen, tatsächlich der Schärfentiefenbereich deutlich erhöht werden kann. Dieses harte, einer logischen UND-Verknüpfung entsprechende Vorgehen könnte aber auch modifiziert werden.

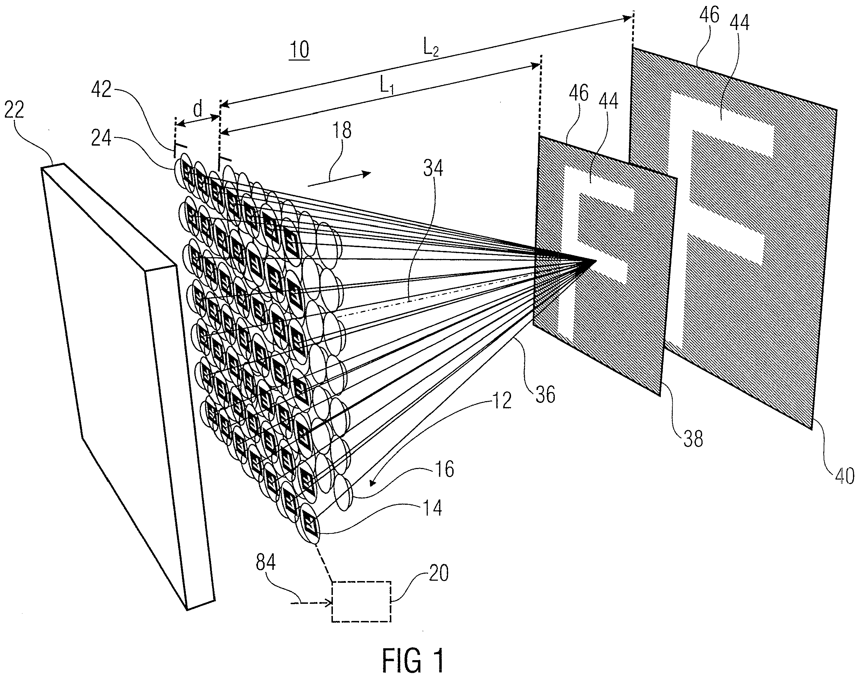

Wie es nachfolgende Ausführungsbeispiele noch deutlich werden lassen, sind die zu projizierenden Bilder in den unterschiedlichen Entfernungen nicht auf selbst-ähnliche bzw. gemäß der optischen Projektion ineinander überführbare zu projizierende Bilder beschränkt. Vielmehr können beliebige Bildinhalte an den unterschiedlichen Projektionsentfernungen erhalten werden. Zunächst einmal soll aber anhand der Figuren 1 bis 2 der Gedankengang bzw. die Konstruktionsvorschrift für die Einzelbild-Inhalte der einzelnen Objektstrukturen, die ja kanalabhängig sind, anhand des Spezialfalls der erweiterten Schärfentiefe beschrieben werden.

Die Beschreibung erfolgt zunächst beispielhaft anhand der Projektion eines hellen Objekts, hier eines Buchstaben "F" auf zwei senkrechte Schirmebenen. Eine Erweiterung auf beliebig viele (Zwischen-)Distanzen ist offensichtlich und wird nachfolgend auch noch mathematisch beschrieben.

Die Bildinhalte der einzelnen Objektstrukturen bzw. Einzelbilder sind also kanalabhängig. Die Konstruktionsvorschrift derselben wird zwar zunächst anhand des Spezialfalls der erweiterten Schärfentiefe näher beschrieben, aber im Anschluss daran erfolgt auch die Beschreibung und der Hinweis, dass verschiedene Bildinhalte an unterschiedlichen Projektionsentfernungen erzeugbar sind.

Fig. 1 zeigt zunächst den Aufbau eines Multiapertur-Projektionsdisplays gemäß einem Ausführungsbeispiel. Das Multiapertur-Projektionsdisplay umfasst eine Mehrzahl von lateral benachbarten Projektionskanälen 12, d.h. ein Projektionskanalarray. Jeder Projektionskanal besitzt einen Einzelbilderzeuger 14 zum Erzeugen eines jeweiligen Einzelbildes und eine Optik 16 zum Abbilden des jeweiligen sich in einer Objektebene 42 der Optik 16 befindlichen Einzelbilds in eine Projektionsrichtung 18 des Multiapertur-Projektionsdisplays 10. Bei den Einzelbilderzeugern 14 handelt es sich beispielsweise um hinterleuchtbare Schattenmasken. Sie können beispielsweise aus Teilen einer gemeinsamen Schattenmaske gebildet sein. Bei den Einzelbilderzeugern 14 kann es sich allerdings auch um selbstleuchtende Elemente handeln, wie z.B. um OLEDs, die leuchtende Flächen aufweisen, die dem jeweiligen Einzelbild des jeweiligen Kanals 12 entsprechen. Bei den Einzelbilderzeugern könnte es sich allerdings auch um Displays handeln, die in der Lage sind, einen variierenden Bildinhalt anzuzeigen, wobei in diesem Fall eine Steuerung 20 vorhanden wäre, um die Bildinhalte der Einzelbilderzeuger auf die jeweiligen Einzelbilder einzustellen, wie es im Folgenden noch näher beschrieben wird. Zur Hinterleuchtung - falls vorhanden - könnte eine flächige Lichtquelle 22 wie in Fig. Exemplarisch gezeigt verwendet werden, oder eine Lichtquelle pro Kanal 12. Die flächige Lichtquelle 22 ist beispielsweise eine OLED, ein LED-Array oder dergleichen. Die flächige Lichtquelle 22 könnte ausgebildet sein, um ein bereits vorkollimiertes Hinterleuchtungslicht auszustrahlen. In Projektionsrichtung 18 sind flächige Lichtquelle 22, Bilderzeuger 14 und Optiken 16 hintereinander geschaltet, so dass die Hinterleuchtung durch transmissive Abschnitte der Einzelbilder der Einzelbilderzeuger 14 tritt und die solchermaßen hellen Abschnitte der Einzelbilder durch die Optiken 16 in die Projektionsrichtung 18 abgebildet werden, wo sie sich geeignet überlagern, und ein zu projizierendes Bild ergeben, wie es ebenfalls im Folgenden noch näher beschrieben wird. Um eine Köhlersche Hinterleuchtung zu erhalten, kann pro Projektionskanal 12 optional noch ein Kollimator 24 vorgesehen sein: Auf diese Weise kann ein Lichtfluss durch die Kanäle 12 und damit eine Lichtausbeute gesteigert werden.

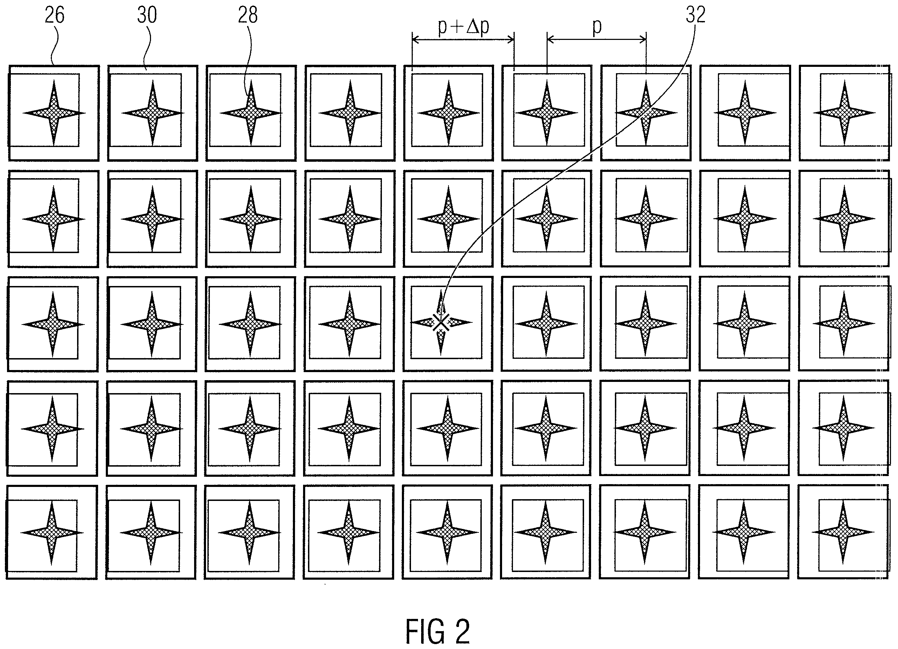

Fig. 2 zeigt noch eine Draufsicht auf das Array von Kanälen 12 mit dem Array aus Optiken 16, deren Aperturen 26 hier exemplarisch als Quadrate und deren Eintrittspupillenpositionen 28 hier exemplarisch mit Sternen angezeigt sind. Wie es in Fig. 2 zu sehen ist, können die Optiken regelmäßig in einem Array aus Zeilen und Spalten angeordnet sein, aber jedwede andere Anordnung ist ebenfalls möglich. Zudem können die Eintrittspupillen 28 mittig zu den jeweiligen Aperturen 26 angeordnet sein, aber auch hier bestehen Variationsmöglichkeiten. Fig. 2 zeigt auch das Array aus Einzelbildern 30 der Einzelbilderzeuger. Sie bilden ebenfalls eine laterale Anordnung. Insbesondere sind die Einzelbilder 30 in einer lateralen Anordnung positioniert, die zu der lateralen Anordnung der Eintrittspupillen 28 geometrisch ähnlich ist. In dem Fall von Fig. 1 geht sie durch eine zentrische Streckung um eine Mitte 32 des Arrays aus Eintrittspupillen 28 aus der Anordnung der Eintrittspupillen 28 hervor. Optional kann auch ein translatorischer Versatz relativ zu dem Array aus Eintrittspupillen 28 hinzukommen. Hier fallen Mitte des Einzelbildarrays und Mitte des Eintrittspupillenarrays aufeinander. Durch die soeben genannten Mitten verläuft die optische Achse 34 des Multiapertur-Projektionsdisplays 10, wie es in Fig. 1 angezeigt ist. Auch Abweichungen von der geometrischen Ähnlichkeit wären denkbar, um beispielsweise Anpassungen an gekrümmte Schirmgeometrien vorzunehmen In Fig. 2 ist dies nicht der Fall.

Bevor nun mit der weiteren Beschreibung fortgefahren wird, sollen noch ein paar allgemeine Bemerkungen erfolgen. Bei Fig. 1 ist exemplarisch davon ausgegangen worden, dass es sich bei den Einzelbilderzeugern um Schattenmasken 14 handelt, wie z.B. Chrommasken, die dunkle Abschnitte bzw. blockierende Abschnitte und helle Abschnitte bzw. transmissive Abschnitte aufweisen. Es ist allerdings ebenfalls möglich, anstelle einer Hinterleuchtung eine Reflektivität von Masken auszunutzen. Anders ausgedrückt, könnte es sich bei den Einzelbilderzeugern 14 auch um reflektive Masken handeln, die helle bzw. reflektive Abschnitte und dunkle bzw. nicht-reflektive Abschnitte aufweisen. Die Vorderleuchtung könnte durch eine Lichtleiterplatte realisiert werden, die zwischen Optikarray und Einzelbilderzeugerarray angeordnet ist, seitlich beleuchtet wird und an ihrer den Einzelbilderzeugern 14 zugewandten Seite an den reflektiven Abschnitten der Masken 14 reflektiertes Licht zu den Optiken 16 durchlässt. In dem Fall selbstleuchtender Einzelbilderzeuger existierten auf ähnliche Weise ebenfalls helle bzw. selbstleuchtende Abschnitte und dunkle bzw. nicht-leuchtende Abschnitte und im Folgenden wird zu den hellen Abschnitten auch manchmal nicht-null-wertiger Abschnitt und zu den dunklen Abschnitten null-wertiger Abschnitt verwendet. OLEDs wären eine Möglichkeit zur Formung fester Einzelbilder und Displays bzw. Bildgeber, wie z.B. LCDs oder dergleichen, Beispiele für verstellbare Einzelbilderzeuger, die ihren jeweiligen Bildinhalt ändern können. Wie gesagt können die Einzelbilderzeuger 14 auch unterschiedliche Teile eines einzigen Einzelbildarrayerzeugers darstellen, wie z.B. ein Array von Abschnitten einer Maske, ein Array von Abschnitten eines Bildgebers usw.

Der Abstand der Projektionsoptiken 16 zu den Einzelbildern bzw. Einzelbilderzeugern 14 bzw. der Abstand zwischen dem Array aus Optiken 16 und dem Array aus Einzelbildern 30 bzw. dem Array aus Einzelbilderzeugern 14, der in Fig. 1 exemplarisch mit d angezeigt ist, entspricht in etwa der Brennweite F der Einzelprojektionsoptiken 16. Die Einzelbilder 26 werden also bezogen auf jeden einzelnen Kanal 12 entlang der für den jeweiligen Kanal 12 spezifischen optischen Achse 36 mit einer sehr großen, bis ins Unendliche gehenden Schärfentiefe abgebildet. In dem Fall, dass alle Einzelbilder 30 gleich zueinander sind, ergäbe sich ein scharfes Bild an einem Projektionsabstand $L_1$, der wie im Vorhergehenden beschrieben von der Mittenabstanddifferenz $\Delta p$ zwischen Einzelbildern 30 und Eintrittspupillen 28 abhängt.

Wie es im Folgenden aber eben noch näher definiert werden wird, sind gemäß Ausführungsbeispielen von Fig. 1 die Einzelbilder 26 eben nicht gleich zueinander, sondern sie sind vielmehr geeignet so konstruiert, dass sich die Abbildungen der Einzelbilder 30 der Projektionskanäle 12 an zumindest zwei unterschiedlichen Projektionsentfernungen $L_1$ und $L_2$ zu jeweils einem projizierten Bild 38 bzw. 40 überlagern, wobei die Einzelbilder an Orten, an denen sich nicht-null-wertige Abschnitte der projizierten Bilder bei einer Rückprojektion über die Optiken 16 der Projektionskanäle 12 in die Objektebene 42, in der die Einzelbilder 30 liegen, zumindest teilweise befinden, aber nicht alle überlagern, gegenüber einer positiven Überlagerung mehr abgedunkelt sind als an Orten, an denen sich die nicht-null-wertigen Abschnitte der projizierten Bilder 38 und 40 bei Rückprojektion über die Optiken 16 in die Objektebene 42 gegenseitig alle überlagern. Nachfolgend wird dies noch näher erläutert werden, aber vorab schon mal so viel: Hält man einen Schirm vor das Projektionsdisplay 10, so dass der Schirm in Abbildungsrichtung 18 hinter dem Projektionsdisplay 10 angeordnet ist, so kann man feststellen, dass das auf diesen Schirm projizierte Bild bei den Entfernungen $L_1$ und $L_2$ von dem Projektionsdisplay 10 Schärfemaximal aufweist. Für diese Entfernungen sind die Einzelbilder 30, wie nachfolgend noch näher beschrieben, speziell entworfen. Es handelt sich um Sollentfernung/distanzen. Diese Bilder besitzen nun helle Abschnitte 44 und dunkle Abschnitte 46. In dem Fall von Fig. 1 handelt es sich exemplarisch um den Schärfentiefeerweiterungsfall und somit um den Fall, dass es sich bei den projizierten Bilder 38 und 40 um solche handelt, die durch zentrische Streckung bzw. Projektion auf den Punkt 32, d.h. den Schnittpunkt zwischen optischer Achse 34 und Eintrittspupillenebene, ineinander überführbar sind, aber im Folgenden wird noch beschrieben, dass dies natürlich nur ein Beispiel darstellt. Betrachtet man die Rückprojektion dieser projizierten Bilder 38 und 40 getrennt voneinander, dann wird jedes dieser projizierten Bilder 38 bzw. 40 in der Objektebene 42, wo die Einzelbilder sitzen, helle Abschnitte und dunkle Abschnitte, d.h. nicht-null-wertige und null-wertige Abschnitte, erzeugen. Die nicht-null-wertigen Abschnitte der Rückprojektion der verschiedenen Bilder 38 und 40 überlappen sich zu einem gewissen Teil. An Stellen, an denen zumindest von einem der Bilder 38 und 40 durch Rückprojektion ein nicht-Null-wertiger Abschnitt liegt, sich diese nicht-Null-wertigen aber nicht vollständig überlappen, also nicht von allen Bildern 38 und 40, d.h. an Stellen, auf die ein heller Abschnitt 44 nur eines der Bilder 38 bzw. 40 rückprojiziert wird, sind die Einzelbilder 30 der Einzelbilderzeuger 14 nun abgedunkelt, nämlich abgedunkelt gegenüber dem Vergleichsfall, bei dem man die Rückprojektionen beispielsweise additiv oder mit einer ODER-Verknüpfung miteinander kombiniert hätte, um eine positive Überlagerung zu erzielen.

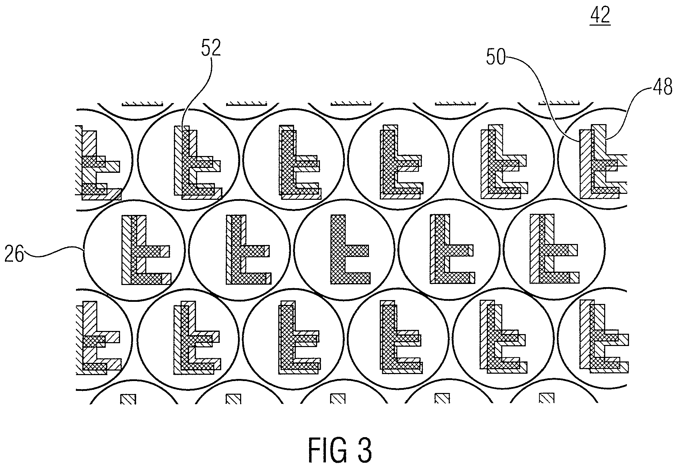

Das soeben Beschriebene soll nun anhand des konkreten Beispiels näher verdeutlicht werden, wie es in Fig. 1 veranschaulicht ist, nämlich anhand der Projektion eines hellen Objekts, hier nämlich eines Buchstaben "F" auf zwei senkrechte Ebenen an den Distanzen $L_1$ und $L_2$, im Folgenden vereinfachend manchmal "Schirmebenen" genannt. Eine Erweiterung auf beliebig viele (Zwischen-)Distanzen du andere Bilder ist offensichtlich. Betrachtet werden zunächst die Sollabstände, $L_1$:$L_2$ = 1:2, in denen die gewünschten Überlagerungsfiguren entstehen sollen. Gemäß Gleichung (3) ergibt sich für beide Sollabstände je ein eindeutiges Dia-Array bzw. ein Array von vorläufigen Einzelbildern. Durch die logische UND-Verknüpfung (Schnittmenge) der transmissiven Flächen beider Dia-Arrays bleiben lediglich jene Flächenelemente erhalten, die in beiden Projektionsabständen einen konstruktiven Beitrag zum Gesamtbild liefern. Fig. 3 zeigt exemplarisch eine Aufsicht auf das Ergebnis einer Rückprojektion der beiden in Fig. 1 gezeigten projizierten Bilder 38 und 40 an den Abständen $L_1$ und $L_2$ auf die Objektebene 42, wobei Kreise in Fig. 3 exemplarisch die Lage der Optikaperturen 26 angeben. Hier sind sie exemplarisch als in einer hexagonalen dichtest gepackten Anordnung nebeneinander liegend dargestellt. Außerdem geht Fig. 3 exemplarisch von einem geringeren Einzelbildmittenabstand verglichen zu dem Aperturmittenabstand aus, wobei solche Ausführungsformen im Folgenden noch beschrieben werden. Das Grundsätzliche aus Fig. 3 gilt allerdings auch für das Ausführungsbeispiel von Fig. 1, nämlich die Rückprojektion der hellen Abschnitte 44 des näheren Bildes 38 mit dem Abstand $L_1$ führt zu dem nicht-null-wertigen bzw. hellen Abschnitt 48 in der Objektebene 42 in den einzelnen Kanälen, welche Abschnitte 48 in Fig. 3 von rechts oben nach links unten straffiert dargestellt sind, während die hellen Abschnitte 44 des projizierten Bildes 40 an der größeren Entfernung $L_2$ zu nicht-null-wertigen bzw. hellen Abschnitten 50 in der Objektebene 42 in den Kanälen 12 führt, die in Fig. 3 von links oben nach rechts unten straffiert dargestellt sind. Aufgrund der größeren Distanz $L_2$ weisen die Bilder 50, die aus der Rückprojektion des Bildes 40 resultieren, einen geringeren Mittenabstand zueinander auf als die Bilder 48, die aus der Rückprojektion des Bildes 38 an der geringeren Distanz $L_1$ resultieren. Aus diesem Grund fällt auch die Schnittmenge bzw. der Überlapp, an denen sich die hellen Regionen 48 und 50 überlappen, von Kanal zu Kanal unterschiedlich aus. Wie es in Fig. 3 zu sehen ist, fällt der Überlapp flächenmäßig umso kleiner aus, je weiter der jeweilige Kanal von der optischen Achse 34 des Multiapertur-Projektionsdisplays entfernt ist. Die Schnittmengenbereiche bzw. Bereiche, an denen sich beide nicht-null-wertige Abschnitte 48 und 50 in den jeweiligen Kanälen überlappen, sind in Fig. 3 mit den dunklen Bereichen 52 veranschaulicht.

Gemäß einem Ausführungsbeispiel wird nun jedes Einzelbild 30 so gewählt, dass die Bereiche 48 und 50 jenseits der Schnittmengenbereiche 52 abgedunkelt werden. Im Maskenausführungsbeispiel sind dort die Masken also nicht transmissiv. Sie sind lediglich im Überlappungsbereich 52 transmissiv. Dies ist wiederum in Fig. 4a dargestellt, die ebenso wie Fig. 3 eine Draufsicht auf die Objektebene 42 zeigt, und zwar eine Draufsicht auf die sich ergebenden Einzelbilder 30, deren nicht-null-wertige Abschnitte, z.B. transmissive Abschnitte, den Schnittmengenbereichen 52 aus Fig. 3 entsprechen.

Fig. 4b zeigt exemplarisch den Beitrag bzw. den hellen Bereich 53, der sich durch einen exemplarisch beliebig herausgegriffenen Kanal 12' in der Entfernung $L_1$ ergibt, und zwar relativ zu dem hellen Abschnitt 44, wie er sich durch Überlagerung der Einzelbilder bzw. der hellen Abschnitte 52 aller Kanäle in dem Bild 38 in diesem Abstand $L_1$ ergibt. Um den Versuch zu unternehmen, zu erklären, wieso sich in dem Abstand $L_1$ in dem Bild 38 der Bereich 44 dennoch zu einem "schönen" "F" zusammenfügt, zeigt Fig. 4c den Beitrag, der sich durch den transmissiven Bereich des Einzelbilds 30 eines anderen beliebig herausgegriffenen Kanals 12" ergibt, wobei dieser Bereich wieder mit 53 in seiner relativen Lage im Gesamtbereich 44 angezeigt ist. Er deckt offensichtlich andere Teile des Bereichs 44 ab als der Kanal 12' in dem Abstand $L_1$. Die Figuren 4d und 4e zeigen den Beitrag 53 für die exemplarisch ausgewählten Kanäle 12' und 12" entsprechend für deren Beiträge 53 zum hellen Bereich 44 des projizierten Bilds 40 in dem Abstand $L_2$, und zwar Fig. 4d für den Kanal 12' und Fig. 4e für den Kanal 12". Wieder decken sie unterschiedliche Teile des Bildes bzw. des hellen Bereichs 54 des Bildes 40 ab. Andere Kanäle decken wiederum weitere, andere Zonen der Bereiche 44 in den Bildern 38 und 40 ab, woraus sich die gewünschten Bereiche 44 exakt ergeben.

In anderen Worten ausgedrückt, wird gemäß dem soeben beschriebenen Ausführungsbeispiel, um zu dem Maskenarray von Fig. 4a zu gelangen, zunächst einmal für alle Elemente der Gesamtobjektstruktur, d.h. für die transmissiven Bereiche des Maskenarrays von Masken 14 geprüft, ob sie für alle zu den Projektionsdistanzen $L_1$ und $L_2$ gehörigen Mustern einen transmissiven Anteil liefern, d.h. ob sie im Überlappbereich 53 liegen. Fällt diese Überprüfung positiv aus, so bleiben sie erhalten, anderenfalls werden sie aus der resultierenden Objektstruktur bzw. den Masken entfernt, d.h. solche Orte werden abgedunkelt bzw. nicht-transmissiv gemacht. Mathematisch entspricht dies einer Element- bzw. Ortsselektivweisen UND-Verknüpfung, also der Schnittmenge 52 aller Objektstrukturen 48, 50, die jeweils einer Projektionsdistanz zugeordnet sind. Fig. 4A zeigt somit die resultierende Maskenstruktur gemäß der soeben beschriebenen Schnittmengenprüfung.

In anderen Worten ausgedrückt, wird gemäß obigen Ausführungsbeispiel in jedem Kanal ein eindeutiger Stempel bzw. eine transmissive Struktur erzeugt, der in den beiden oder mehreren Sollabständen oder gar in einem kontinuierlichen Projektionstiefenbereich einen derartigen Beitrag zur Gesamtüberlagerung bereitstellt, so dass die Konturen der jeweiligen Sollbilder, bzw. des Sollbildes in den jeweiligen Sollabständen erhalten bleiben.

Es folgt eine konsistente Beschreibung sowohl der distanzabhängig variablen Bildprojektion und der erweiterten Schärfentiefe:

Wir betrachten die Objektstruktur-Ebene und setzen den Koordinatenursprung in deren Zentrum.

$$Muster_{L_k}(i,j) \subseteq \mathcal{R}^2$$

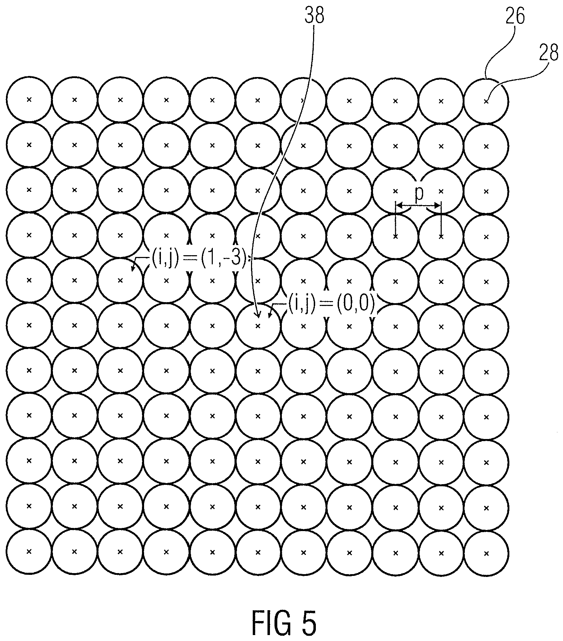

beschreibt für das Lenslet bzw. Kanal 12 (i,j) - wobei wie in Fig. 5 veranschaulicht, (i,j) exemplarisch die laterale Position gemessen von der Position relativ zur optischen Achse 38 gemessen in Einheiten p angeben soll - das abzubildende Muster für den Abstand bzw. die Geometrie $L_k \in \mathcal{L}$. Für den Arrayprojektor aus [2] ist $|\mathcal{L}| = 1$, das heißt es gibt nur eine Geometrie auf die scharf abgebildet werden soll. Die vorliegende Erfindung ermöglicht es für zwei oder mehr Geometrien $\mathcal{L} = \{L_1, \dots, L_n\}$ ein scharfes Bild zu erzeugen. Dabei kann es sich immer um das gleiche Muster handeln (Schärfentiefeerweiterung), oder aber auch unterschiedliche Muster für verschiedene Abstände.

Gegeben sei ein gewünschtes Bild $Bild_{L_k}$ für einen spezifischen Projektionsabstand $L_k$ (hier vereinfacht: senkrechter Schirm). Eine Verallgemeinerung auf Freiform-Schirmgeometrien ist gemäß [3] möglich. Gemäß der Abbildungsvorschriften (Gleichung (3)) ergibt sich für ein quadratisch angeordnetes Array (Bild 13) objektseitig für den Einzelkanal (i,j) folgendes Dia bzw. Objektstruktur $Muster_{Lk}(i,j)$ :

$$Muster_{L_k}(i,j) = \{(x,y) \in \mathbb{R}^2 : \exists (x_0, y_0) \in Bild_{L_k} : x = \frac{x_0}{M_k} + j \cdot (\Delta p_x(L_k) + p_x)$$

und

$$y = \frac{y_0}{M_k} + i \cdot \left( \Delta p_y(L_k) + p_y \right) \}$$

Dabei ist $M_k = \frac{L_k}{s}$ der Abbildungsmaßstab für die k-te Projektionsdistanz, $p_x = p_y = p$ der Abstand der Linsen dieses Arrays und $\Delta p(L_k) = \Delta p_x(L_k) = \Delta p_y(L_k) = \frac{s}{L_k} \cdot p = \frac{1}{M_k} \cdot p$ die projektionsabstandsabhängige Mittenabstandsdifferenz.

Wir beschreiben nun mit $\text{Muster}_{\text{Schnitt}}(i,j)$ die Fläche(n), welche im Kanal (i,j) durch folgende UND-Verknüpfung entsteht:

$$\text{Muster}_{\text{Schnitt}}(i,j) := \bigcap_{L_k \in \mathcal{L}} Muster_{L_k}(i,j) \quad \text{und} \quad \mathcal{L} = \{L_1, \dots, L_n\}.$$

Die Gesamttransmission eines derartigen Projektionssystems ist proportional zur Summe der transmittiven Flächen der Einzeldias. Dabei gilt für den beleuchteten Flächeninhalt eines Kanals $A_{\text{Muster}}(i,j)$:

$$A_{\text{Muster}}(i,j) := \iint I_{Muster_{Schnitt}(i,j)}(x,y) \, dx \, dy$$

Hierbei ist I die Indikatorfunktion (oder auch Charakteristische Funktion) und ist wie folgt definiert:

$$I_M(x,y) = \begin{cases} 1, & falls \ (x,y) \in M \\ 0, & sonst \end{cases}$$

Maßgeblich für die Gesamttransmission einer - gemäß dieses Verfahrens erzeugten - Projektoranordnung ist die transmittive Gesamtfläche aller Projektionskanäle

$$A_{gesamt} = \sum_{i,j} A_{Muster}(i,j).$$

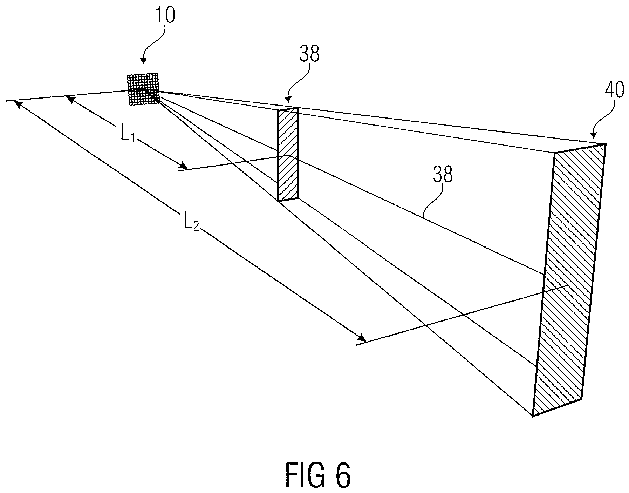

Als Beispiel 1 beschreiben wir ein zentriertes Rechteck, welches in der Schirm-Ebene $L_1$ = *400mm* die Maße *Breite* × *Höhe* = $B_1$ × $H_1$ = *5mm* × *20mm* und in $L_2$ = *800mm* gemäß des Schirmdistanzverhältnisses ($L_2$:$L_1$ = 2:1) $B_2$ × $H_2$ = 2 · ($B_1$ × $H_1$) = *10mm* × *40mm* beträgt (Fig. 6).

$$Muster_{L_1}(i,j) = \{(x,y) \in \mathbb{R}^2 : -\frac{1}{2}\frac{B_1}{M_1} + j \cdot (\Delta p_x(L_1) + p_x) \leq x \leq +\frac{1}{2}\frac{B_1}{M_1} + j \cdot (\Delta p_x(L_1) + p_x)$$

*und*

$$-\frac{1}{2}\frac{H_1}{M_1} + i \cdot \left(\Delta p_y(L_1) + p_y\right) \leq y \leq +\frac{1}{2}\frac{H_1}{M_1} + i \cdot \left(\Delta p_y(L_1) + p_y\right)\}$$

$$Muster_{L_2}(i,j) = \{(x,y) \in \mathbb{R}^2 : -\frac{1}{2}\frac{B_2}{M_2} + j \cdot (\Delta p_x(L_2) + p_x) \leq x \leq +\frac{1}{2}\frac{B_2}{M_2} + j \cdot (\Delta p_x(L_2) + p_x)$$

*und*

$$-\frac{1}{2}\frac{H_2}{M_2} + i \cdot \left(\Delta p_y(L_2) + p_y\right) \leq y \leq +\frac{1}{2}\frac{H_2}{M_2} + i \cdot \left(\Delta p_y(L_2) + p_y\right)\}$$

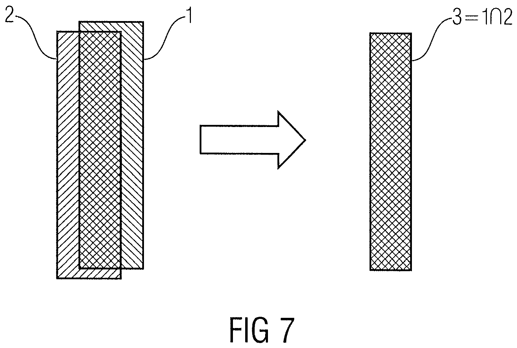

Für (i,j)=(2,4), $\mathcal{L} = \{400mm, 800mm\}$ und $p = 0.8mm$ (mit Array-Aufbau aus Fig. 5) ergibt sich für das obige Rechteck Objektstrukturen analog zu Fig. 7:

$$\text{Muster}_{\text{Schnitt}}(2,4) = \{(x,y) \in \mathbb{R}^2 : 3.2035mm \leq x \leq 3.2205mm \text{ und } 1.558mm \leq y \leq 1.654mm\}.$$

Dies beschreibt die transmittive Fläche (vgl. Fig. 7) für das Lenslet (2,4).
Es ergibt sich für die transmittive Fläche dieses exemplarisch gewählten Projektorlets:

$$A_{\text{Muster}}(2,4) := \iint I_{Muster_{Schnitt}(2,4)}(x,y) \, dx \, dy = 1.632 \cdot 10^{-3} \, mm^2 \quad .$$

Vergleicht man nun die transmittive Fläche des kompletten Array-Projektors mit erweiterter Schärfentiefe mit der eines herkömmlichen gemäß [2], so ergibt sich ein relativer Lichtverlust von 26%.

$$\frac{\sum_{i,j=-5}^{5} A_{Muster}(i,j)}{121 \cdot A_{Muster}(0,0)} \approx 74\%$$

Die tiefenabhängigen Abbildungseigenschaften eines Array-Projektors mit manipulierten Objektstrukturen gemäß Erfindung ist sehr stark von den zu projizierenden Lichtmustern abhängig und unterscheidet sich grundlegend von denen eines konventionellen einkanaligen Projektionssystems. Exemplarisch soll im Folgenden ein stark vereinfachtes Beispiel aufzeigen, inwiefern sich die Abbildung einer einfachen Hell-Dunkel-Kante für die verschiedenen optischen Systeme verhält, um anschließend daraus zwei äquivalente Systeme gegenüberstellen zu können.
Im Folgenden wird anhand einer Hell-Dunkel-Kante untersucht, inwiefern sich die optische Abbildung eines Array-Projektors von der eines konventionelles einkanaligen Projektors, respektive Array-Projektors mit einfacher Solldistanz unterscheidet. Hierbei ist zu unterscheiden in:

a) die Projektionsdistanz der Einzelkanäle $L_{foc}$, vorgegeben durch die Schnittweiten der Projektionsoptiken (im Beispiel: 533mm) und
b) den Solldistanzen, in denen durch oben beschriebene Anordnung bzw. Verfahren eine scharfes Bild generiert werden soll. (im Beispiel: 400mm und 800mm)

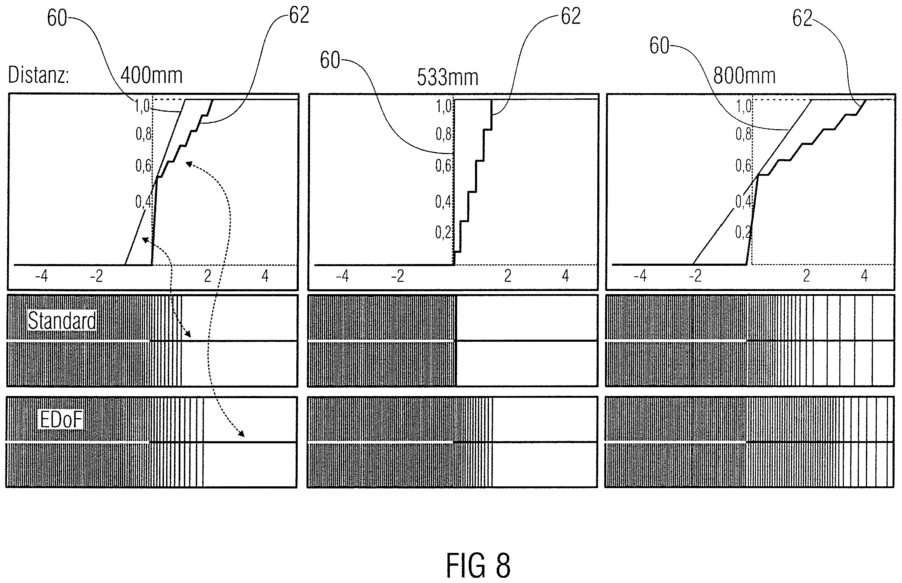

Fig. 8 zeigt die Ergebnisse einer analytischen Simulation der Abbildung einer Hell-Dunkel-Kante für einen konventionellen Projektor (Kurve 60) und einen Array-Projektor mit erweiterter Schärfentiefe ("Extended depth of focus" EDoF). Insbesondere zeigt Fig. 8 eine Gegenüberstellung der Abbildungseigenschaften einer Hell-Dunkel-Kante durch einen konventionellen Projektor (Kurve 60) und einen Array-Projektor mit EDoF (Kurve 62) in 400mm,533mm und 800mm. Die Abszisse im Diagramm entspricht der lateralen Koordinate im Bildraum. Dargestellt ist ein Bereich mit einer Ausdehnung von 10mm. Der Einkanal-Projektor hat eine laterale Ausdehnung von 8.8x8.8mm (quadratische Apertur), während das Array aus 11x11 Einzelprojektorlets einer Einzelausdehnung von 0.8x0.8mm besteht. Die Schnittweite eines jeden Projektorlets ist gemäß Abbildungsgleichung auf 533mm eingestellt. Die Sollabstände des Array-Projektors mit EDoF liegen bei 400mm und 800mm.
Aus den Analysen geht hervor, dass die vorgeschlagene Anordnung die Sichtbarkeit von Bildkanten über einen weiten Projektionsdistanzbereich verbessern kann. In den Bildern wird weiterhin deutlich, dass, im Gegensatz zum klassischen, einkanaligen Projektor sowohl ein asymmetrisches Unschärfeverhalten bei der Abbildung in Nicht-Sollabstände, als auch eine Verschiebung der Kantenmitte $K_{mitte}$ auftritt.
Diese lässt sich wie folgt definieren:

$$Kmitte_{EDoF}(L) = arg \min_{x} |Intensity(L,x) - 0.5|$$

Dabei ergibt sich die (relative) Intensität aus der Überlagerung aller Kanäle unter Berücksichtigung der Verwaschung, welche durch die Defokusierung auftritt.
Aufgrund des asymmetrischen Kantenausdehnungsverhaltens im Bildraum ist es erforderlich, die folgenden Fälle zu unterscheiden: Den Rand der Kante, welcher sich in beleuchtete Bereiche ausdehnt, wird mit $K_{hell}$ bezeichnet.

Analog hierzu kennzeichnet K$_{dunkel}$ den Rand der Kante in dunkle Bildbereiche:

$$Kdunkel_{eDoF}(L) = \max(arg\min_{x}(Intensity(L, x)))$$

$$Khell_{eDoF}(L) = \min(arg\min_{x}(Intensity(L, x)))$$

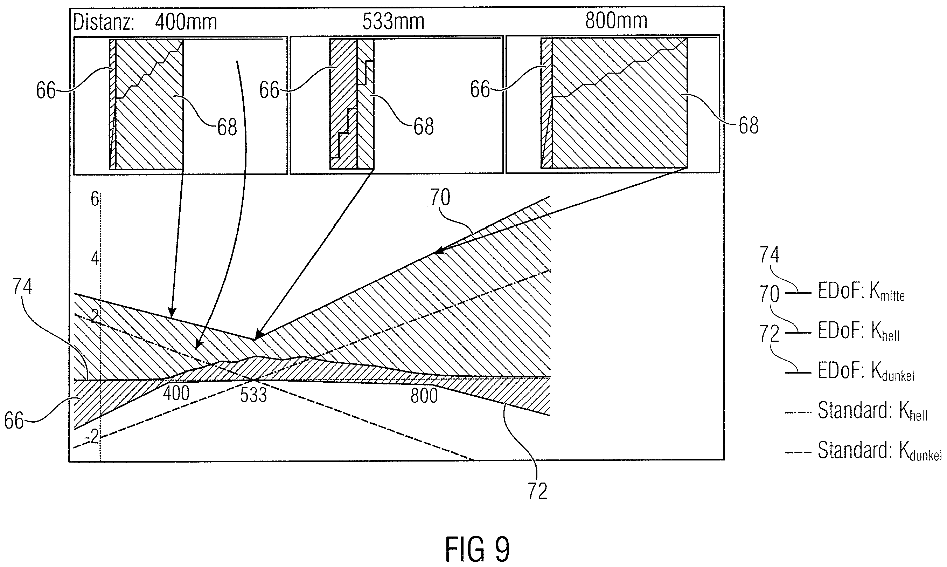

Diese Gleichungen gelten für die exemplarisch gewählte Hell-Dunkel-Verteilung (linksdunkel, rechts-hell). Der inverse Fall ergibt sich analog. Fig. 9 zeigt oben für die ausgewählten Projektionsdistanzen, hier exemplarisch 400mm, 533mm, 800mm, jeweils den Bereich des dunklen Kantenbereichs 66 und des hellen Kantenbereichs 68 dargestellt. Unten ist das Unschärfeverhalten eines konventionellen Projektors mit Strichlinien und eines Array-Projektors mit EDoF (Flächen) dargestellt. Beide Systeme weisen eine identische Gesamtapertur von 8.8x8.8mm$^2$ auf. Deutlich sichtbar sind sowohl die asymmetrische Kantenverwaschung (Kurven 70, 72), als auch Kantenverschiebung (Kurve 74). Die dargestellte Verschiebung der Kantenpositionen kann durch Anpassung der Lichtmuster in den Sollabständen entgegengewirkt werden.

Der Effekt ist also folgender: Wir definieren einen konventionellen einkanaligen Projektor mit folgenden Parametern: Apertur: D=8.8mm (quadratisch), Fokusdistanz: L$_{foc}$=533mm, und untersuchen im Folgenden, in wie weit dessen Pupille verkleinert werden müsste, um in einer Distanz von 400mm und 800mm ein gegenüber der vorgeschlagenen Anordnung gleiches Unschärfeverhalten aufzuweisen. Die Auswertung von Gleichung (3) ergibt, dass die Pupille des **einkanaligen Projektors** auf 1.46mm eingeschränkt werden müsste, was einer Reduktion des Lichtflusses auf ca. 3% entspricht. Diesem Wert steht unter Nutzung der hier vorgeschlagenen Anordnung zur **Schärfentiefeerweiterung** (EDoF) ein Lichtfluss von ca. **74%** gegenüber (Beispiel: helles Rechteck s.o.). Es gilt hier zu beachten, dass dieser Transmissionsverlust des vorgeschlagenen Systems stark vom zu projizierenden Bild bzw. den gewählten Sollabständen abhängt. Für typische Bildinhalte und Projektionsdistanzen sind Werte >60% zu erwarten.

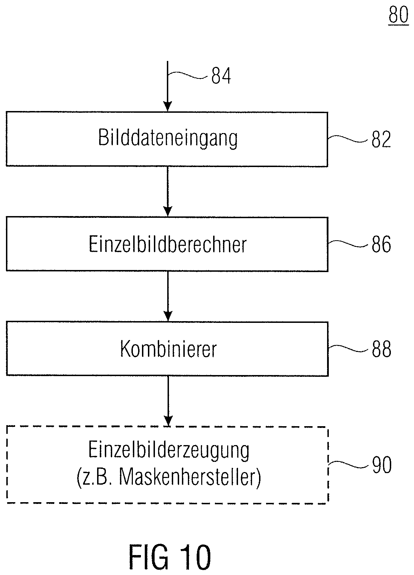

Die obigen Ausführungen aufgreifend zeigt Fig. 10 ein Ausführungsbeispiel für einen Einzelbilderzeuger für ein Multiapertur-Projektionsdisplay mit einer Mehrzahl von Projektionskanälen. Der Einzelbilderzeuger ist allgemein mit dem Bezugszeichen 80 angezeigt. Der Einzelbilderzeuger 80 von Fig. 10 umfasst einen Bilddateneingang 82 zum Empfangen von Bilddaten 84, die zumindest zwei zu projizierende Bilder in unterschiedlichen Projektionsentfernungen darstellen, wie z.B. eben die Bilder 38 und 40 in den Entfernungen L$_1$ und L$_2$. Ferner umfasst der Einzelbilderzeuger 80 einen Einzelbildberechner 86, der ausgebildet ist, für jedes der zumindest zwei zu projizierenden Bilder, pro Projektionskanal 12 des Multiapertur-Projektionsdisplays ein vorläufiges Einzelbild zu berechnen, wie z.B. eben jene Bilder 48 und 50. Ein Kombinierer 88 des Einzelbilderzeugers 80 kombiniert für jeden Projektionskanal die für die zumindest zwei zu projizierenden Bilder berechneten vorläufigen Einzelbilder des jeweiligen Projektionskanals zu einem endgültigen Einzelbild für den jeweiligen Projektionskanal, wie z.B. eben zu jenen endgültigen Einzelbildern, wie sie in Fig. 4a dargestellt sind. Wie gesagt, Erweiterungen auf mehr zu projizierende Bilder usw. ist ebenfalls möglich.

Im Prinzip stellt Fig. 10 auch die Schritte eines entsprechenden Einzelbilderzeugungsverfahrens dar, nämlich des Empfangs von Bilddaten mit 82, der Berechnung vorläufiger Einzelbilder bei 86 und der Kombination derselben in 88. Die folgende detailliertere Funktionsbeschreibung soll deshalb auch als eine Beschreibung des entsprechenden Verfahrens verstanden werden.

Bevor die Bilderzeugung gemäß Fig. 10 auch noch näher beschrieben wird, soll darauf hingewiesen werden, dass die Bilderzeugung gemäß Fig. 10 offline oder online stattfinden kann. Dies bedeutet Folgendes. Eine Einzelbilderzeugung könnte beispielsweise bei dem Ausführungsbeispiel von Fig. 1 innerhalb der Steuerung 20 stattfinden. Dann wäre es möglich, Bilddaten 84 einzuspeisen, die die Wunschbilder 38 und 40 angeben, und die Einzelbilderzeugung steuerte dann die Einzelbilderzeuger 14 von Fig. 1 entsprechend an, so dass diese die endgültig berechneten Einzelbilder anzeigen. Die Einzelbilderzeuger bzw. das Einzelbilderzeugungsverfahren von Fig. 10 kann allerdings auch ein reines Design-Tool sein oder Teil eines Herstellungsverfahrens zur Herstellung der Einzelbilderzeuger 14, wie z.B. der Masken, in dem Fall, dass die Einzelbilderzeuger 14 aus Masken gebildet sind. Die letzten Alternativen sind in Fig. 10 mit einer gestrichelten Box 90 subsummiert, die mit "Einzelbilderzeugung" beschriftet ist. Es kann sich bei ihr somit um einen Maskenerzeuger bzw. um eine Maskenerzeugung handeln. Als Alternative könnte das Ergebnis der Kombination 88 auch das Ausgeben von Daten in beispielsweise gespeicherter Form auf einem geeigneten Datenträger sein, die die Anordnung aus Einzelbildern 30, wie sie sich aus der Kombination ergibt, darstellt.

Ein einfacher Fall, wie er nun im Vorhergehenden beschrieben worden ist, besteht darin, dass die Bilddaten 84 die zumindest zwei zu projizierenden Bilder 38 und 40 binärwertig darstellen, d.h. als lediglich helle Bereiche 44 und dunkle Bereiche 46 ausschließlich aufweisend. Die Einzelbildberechnung im Berechner 86 berechnet in diesem Fall beispielsweise für jedes der zu projizierenden Bilder 38 bzw. 40 das Array aus vorläufigen Einzelbildern 30 so, dass für jedes zu projizierende Bild 38 bzw. 40 das jeweilige Array von vorläufigen Einzelbildern bzw. die vorläufigen Einzelbilder selbst, eine Rückprojektion über das Array von Optiken 14 in die Objektebene 42 darstellen. Das Ergebnis wären binärwertige vorläufige Einzelbilder wie sie exemplarisch in Fig. 3 mit 48 bzw. 50 angezeigt sind. Die Berechnung würde also unter Verwendung optischer Parameter des Multiapertur-Projektionsdisplays 10 stattfinden, wie z.B. optischer Abbildungsparameter, wie z.B. der Projektionsentfernungen $L_1$, $L_2$, des Aperturmittenabstandes p, der Objektdistanz d und gegebenenfalls optional noch weiteren Parametern. Die Berechnung kann aber auch komplexer sein. Sie muss insbesondere nicht eindeutig sein. Beispielsweise wäre es möglich, die Berechnung für nicht senkrecht zur optischen Achse 34 stehende Projektionsebenen oder sogar gekrümmte durchzuführen, wozu exemplarisch auf [3] verwiesen wird. Bildanteile könnten unterschiedlich auf die Kanäle verteilt werden, wie z.B. zur Schärfeerhöhung.

Der Kombinierer 88 führt dann die Kombination der binärwertigen vorläufigen Einzelbilder bzw. der Anordnung von binärwertigen vorläufigen Einzelbildern durch, wie z.B. durch die zuvor erwähnte logische Verknüpfungsoperation, nämlich eine UND-Verknüpfung in dem Fall, dass die logische 1 den hellen Abschnitten entspricht, und eine logische ODER-Verknüpfung in dem Fall, dass die logische 1 den dunklen Abschnitten entspricht. Das Ergebnis wäre also ein endgültiges binärwertiges Einzelbild pro Kanal bzw. eine Anordnung solcher endgültiger Einzelbilder mit dunklen bzw. hellen Abschnitten, die beispielsweise transmissive, reflektive oder selbstleuchtende Abschnitte darstellen können, wie es im Vorhergehenden beschrieben wurde. In dem Fall von transmissiven Masken, würden entsprechende Chrommasken erstellt werden können, wie es ebenfalls gerade beschrieben wurde. Anderenfalls wird ein pixellierter Bildgeber geeignet angesteuert, um die hellen bzw. dunklen Bereiche anzuzeigen.

Eine andere Möglichkeit besteht darin, dass die zu projizierenden Bilder 38 bzw. 40 durch die Bilddaten 84 nicht binärwertig dargestellt werden. Sie können also höherwertig sein, wie z.B. dreiwertig. In diesem Fall verteilt der Einzelbildberechner 86 beispielsweise in seiner Berechnung die verschiedenwertigen Anteile der Bilder 38 und 40 auf unterschiedlich viele Kanäle 12, so dass pro zu projizierendes Bild 38 die berechneten vorläufigen Einzelbilder zwar binärwertig sind, aber bei ihrer Überlagerung das mehrwertige zu projizierende Bild 38 in der jeweiligen Projektionsentfernung ergeben. Die Kombination in dem Kombinierer 88 funktioniert dann wieder genauso wie in dem Fall rein binärwertiger zu projizierender Bilder 38 bzw. 40.

Es wird darauf hingewiesen, dass es zu einem Vorteil von Ausführungsbeispielen der vorliegenden Erfindung gehört, dass ein Maximum eines Differenzbetrages zwischen den zumindest zwei unterschiedlichen Projektionsentfernungen $L_k$, d.h. $\max(\{\forall i, j \leq \text{Anzahl an Projektionsentfernungen: } |L_i\text{-}L_j|\})$ bzw. $\displaystyle\max_{L_i, L_j \in \mathcal{L}} \left( \left| L_i - L_j \right| \right)$, größer sein kann als die üblich erzielbare Tiefenschärfe des Projektionsdisplays für beispielsweise die mittlere Projektionsentfernung L aller Projektionsentfernungen $L_k$, d.h. größer als $\dfrac{2DL^2\beta}{D^2 - L^2\beta^2}$, wobei D gesamt eine Pupillenausdehnung der Optiken der Projektionskanäle, L ein Mittelwert der unterschiedlichen Projektionsentfernungen und $\beta = 0{,}005$ ist. Das ist also besonders interessant für den Fall, dass die zu projizierenden Bilder durch die Bilddaten 84 so angezeigt werden, dass sie eigentlich durch zentrische Projektion bzw. Streckung an dem Schnittpunkt aus optischer Achse 34 und Eintrittspupillenebene auseinander hervorgehen, welcher Fall im Vorhergehenden als Schärfentiefenerweiterungsfall beschrieben worden ist. Die Bilddaten 84 können hierzu beispielsweise bereits so ausgelegt sein, dass sie in einem Format vorliegen, wonach in den Bilddaten 84 der unterschiedlichen Projektionsentfernungen nur ein Bild enthalten ist, aus dem die zumindest zwei zu projizierenden Bilder durch die zentrische Streckung in Abhängigkeit von der jeweiligen Projektionsentfernung hervorgehen.

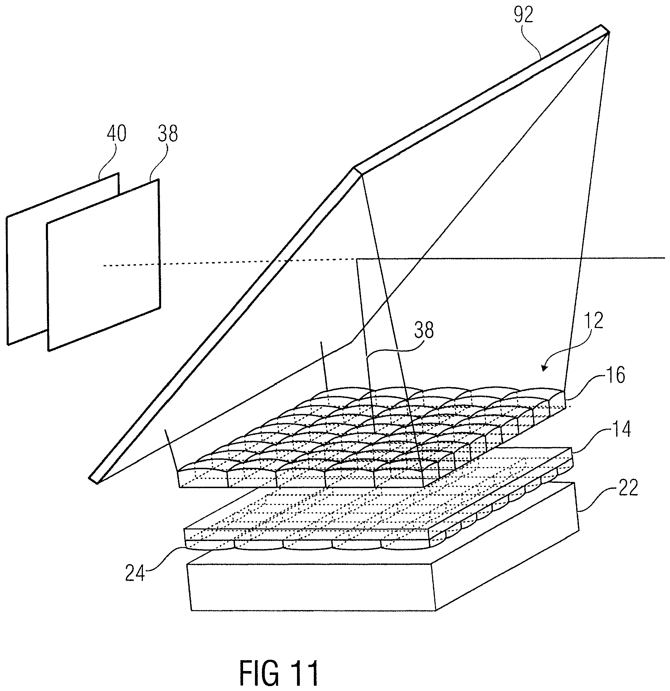

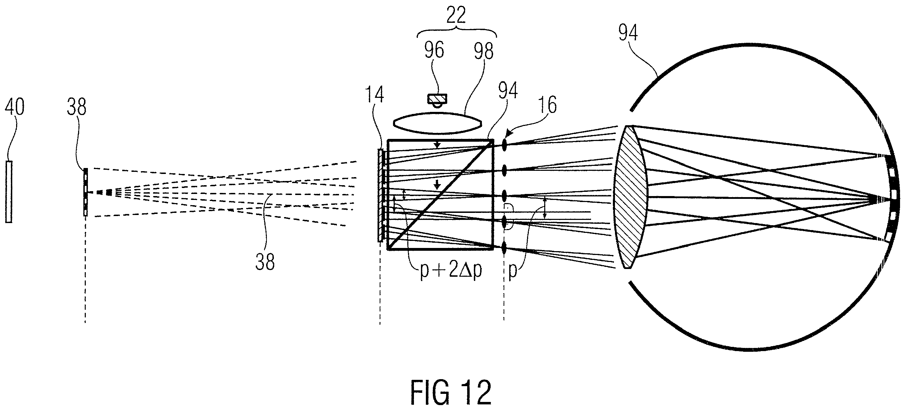

Lediglich der Vollständigkeit halber zeigen Figuren 11 und 12 noch, dass gemäß anderen Ausführungsbeispielen ein Multiapertur-Projektionsdisplay mit den Vorteilen, wie sie im Vorhergehenden beschrieben wurden, gegebenenfalls auch als Head-up-Display zur Einblendung der Bilder 38 und 40 als virtuelle Bilder in die Sicht einer Person über eine geeignete Einspiegelfläche, wie z.B. eine Scheibe 92 eines Automobils, ausgelegt sein kann, oder als Nah-Auge-Display zur Einblendung der Bilder 38 bzw. 40 als virtuelle Bilder in die Sicht des Auges 94 des Betrachters, wie z.B. in Form einer elektronischen Brille. In dem Fall von Fig. 11 sind die Einzelbilderzeuger 14 beispielsweise Abschnitte einer gemeinsamen Maske oder Abschnitte eines gemeinsamen Displays.

Im Unterschied zu Fig. 1 ist lediglich der Eintrittspupillenmittenabstand in dem Fall von Fig. 11 größer als der Einzelbildmittenabstand, wobei die Ausdehnung des Displays, d.h. die durch die Projektionsoptikaperturen insgesamt abgedeckte Fläche mit der Ausdehnung D (vgl. Fig. 15) den Raumwinkelbereich bestimmt, in welchem das Display dem Nutzer die Bilder 38 bzw. 40 anzeigen kann. Die einzelnen Kanäle 12 sind in dem Fall von Fig. 11 dazu da, die Eyemotion-Box der Person, in dessen Sicht die Einblendung erfolgt, abzudecken. In dem Fall von Fig. 12 sind exemplarisch reflektiv arbeitende Einzelbilderzeuger 14 vorgesehen, wie z.B. reflektive Masken. Die Beleuchtung erfolgt über einen Strahlteiler 94 zwischen den Optiken 16 und den Einzelbilderzeugern 14. Eine Lichtquelle 22 wird durch eine divergente Lichtquelle 96 und einen Kollimator 98 gebildet, die kollimiertes Licht seitlich in den Strahlteiler 94 einbringen, so dass die reflektiven Einzelbilderzeuger 14 beleuchtet werden und an den durch die Einzelbilder definierten Stellen Licht durch den Strahlteiler und die Optiken 16 in das Auge 94 reflektieren, wo sich die Abbildungen der Einzelbilder in der Netzhaut überlagern, um die virtuellen Bilder 38 bzw. 40 zu ergeben.

Folgende Hinweise werden zu obigen Ausführungsbeispielen getätigt, um den Eindruck zu zerstreuen, die Ausführungsbeispiele, wie sie oben beschrieben sind, seien nicht erweiterbar oder abänderbar.

1) Obige Ausführungsbeispiel eignen sich insbesondere für die Projektion von binären Lichtmusters, können allerdings auch auf Grauwertbilder erweitert werden durch:

- Überlagerung unterschiedlicher Binärbilder mit definierter Anzahl
- Überlagerung von passenden Grauwertdias mit definierter Anzahl

2) Die Generierung von farbigen Bildinhalten kann analog zu Punkt 1) erfolgen. Das Lichtmuster ist ggf. vor der Durchführung der mathematischen Operationen in seine Grundfarbanteile zu zerlegen.

3) Die beschriebene Operation ist gemäß dem De Morganschen Gesetz ($\neg(a \cup b) = \neg a \cap \neg b$) auch auf die absorbierenden Teile der sich jeweils für alle Sollabstände ergebenden Objektstrukturen anwendbar. Es ergibt sich eine logische ODER-Verknüpfung anstelle einer UND-Verknüpfung.

Es besteht bei obigen Ausführungsbeispielen zum einen gegenüber einem Projektionssystem nach Stand der Technik, wie er in der Beschreibungseinleitung beschrieben wurde, die inhärente Möglichkeit der Projektion eines wechselnden Lichtmusters über die Projektionsentfernung ohne weitere mechanische Hilfsmittel. Als Spezialfall hiervon ergibt sich unter der Maßgabe einer Erhaltung eines Lichtmusters über einen definierten Distanzbereich. Betrachtet man das optische Analogon hierzu (Schärfentiefeerweiterung) so ergibt sich gegenüber klassischen Systemen ein drastischer Gewinn an Systemtransmission und somit eine Effizienzsteigerung. Obige Ausführungsbeispiele liefern dieser Vorteile bzw. die Abbildungseigenschaft, unterschiedlichen Muster auf verschiedene Geometrien bzw. Projektionsabstände zu erzeugen, ohne die Notwendigkeit einer separaten Steuerung bzw. eines Regelkreises.

Obige Ausführungsbeispiele ermöglichen somit eine optische Abbildung einer Vielzahl von kontrastreichen Lichtmustern in verschiedenen Projektionsabständen bzw. Schirmgeometrien. Ein Spezialfall, welcher durch die beschriebenen Beispiele ebenfalls abgedeckt ist, besteht in der Erhaltung eines festen Lichtmusters über variierende Projektionsabstände, respektive Geometrien. Während bei der Generierung wechselnder Bildinhalte keine technische Lösung bekannt ist, liegt bei einer Erhöhung der Schärfentiefe der wesentliche technische Vorteil in einer drastischen Steigerung der effektiven Systemtransmission. Zur Generierung der beschriebenen Abbildungseigenschaften sind keine mechanischen Veränderungen an den Linsen oder Pupillen notwendig. Es erfolgt lediglich eine Manipulation der Objektstrukturen, deren genaue technische Auslegung oben beschrieben wurde. Die Beschränkung auf die Manipulation von Bildinhalten ermöglicht die Realisierung einfacher, kompakter und robuster Projektionssysteme.

Mögliche Anwendungsgebiete obiger Ausführungsbeispiele zur distanzabhängigen Darstellung unterschiedlicher Bildinhalte und zur Erweiterung der Schärfentiefe befinden sich beispielsweise in der 3D-Messtechnik sowie in der strukturierten Beleuchtung und Informationsdarstellung.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Literatur

[1] W.J. Smith, Modern Optical Engineering (McGraw-Hill, 2007).
[2] DE102009024894A1
[3] DE102011076083A1
[4] Marcel Sieler, Peter Schreiber, Peter Dannberg, Andreas Bräuer, and Andreas Tünnermann, "Ultraslim fixed pattern projectors with inherent homogenization of illumination," Appl. Opt. 51, 64-74 (2012).

**Patentansprüche**

**1.** Multiapertur-Projektionsdisplay mit einer Mehrzahl von lateral benachbarten Projektionskanälen (12) mit

jeweils einem Einzelbilderzeuger (14) zum Erzeugen eines jeweiligen Einzelbildes (30) und einer Optik (16) zum Abbilden des jeweiligen sich in einer Objektebene (42) der Optik befindlichen Einzelbildes in eine Projektionsrichtung (18) des Multiapertur-Projektionsdisplays,
wobei die Einzelbilder der Projektionskanäle derart ausgebildet sind, dass sich die Abbildungen der Einzelbilder der Projektionskanäle an zumindest zwei unterschiedlichen Projektionsentfernungen zu jeweils einem projizierten Bild (38, 40) überlagern,

wobei die Einzelbilder bei einer Rückprojektion über die Optiken der Projektionskanäle in die Objektebene (42) der Optiken der Projektionskanäle nicht-null-wertige Abschnitte aufweisen, die sich zu einem gewissen Teil überlappen,

wobei an denjenigen Stellen, an denen zumindest von einem der rückprojizierten Bilder (38, 40) ein nicht-null-wertiger Abschnitt liegt und an denen sich die nicht-null-wertigen Abschnitte der rückprojizierten Bilder (38, 40) nicht überlappen, die Einzelbilder (30) der Einzelbilderzeuger (14) abgedunkelt sind, und zwar abgedunkelt gegenüber einer positiven Überlagerung, und

wobei außerdem ebendiese nicht-null-wertigen Abschnitte dort mehr abgedunkelt sind als an anderen Stellen, an denen sich die nicht-null-wertigen Abschnitte (44) der rückprojizierten Bilder (38, 40) überlagern.

2. Multiapertur-Projektionsdisplay gemäß Anspruch 1, bei dem ein Maximum eines Differenzbetrags zwischen den zumindest zwei unterschiedlichen Projektionsentfernungen größer ist als $\dfrac{2DL^2\beta}{D^2 - L^2\beta^2}$ , wobei D eine Ausdehnung, über die sich alle Optiken der Projektionskanäle erstrecken, L ein Mittelwert der unterschiedlichen Projektionsentfernungen und $\beta=0{,}005$ ist.

3. Multiapertur-Projektionsdisplay gemäß Anspruch 1 oder 2, bei dem der Einzelbilderzeuger (14) so ausgebildet ist, dass für jeden der Mehrzahl von Projektionskanälen das Einzelbild (30) binärwertig ist.

4. Multiapertur-Projektionsdisplay gemäß Anspruch 3, bei dem der Einzelbilderzeuger (14) so ausgebildet ist, dass die projizierten Bilder (38, 40) an den unterschiedlichen Projektionsentfernungen binärwertig sind, und für jeden der Mehrzahl von Projektionskanälen das Einzelbild eine logische UND- oder ODER-Verknüpfung von Rückprojektionen der projizierten Bilder an den unterschiedlichen Projektionsentfernungen über die Optik des jeweiligen Projektionskanals auf die Objektebene der Optik des jeweiligen Projektionskanals darstellt.

5. Multiapertur-Projektionsdisplay gemäß einem der Ansprüche 1 bis 4, bei dem der Einzelbilderzeuger so ausgebildet ist, dass die projizierten Bilder an den unterschiedlichen Projektionsentfernungen durch eine zentrische Projektion auf einen Schnittpunkt zwischen einer optischen Achse (34) des Multiapertur-Projektionsdisplays und einer Ebene, in der Eintrittspupillen (28) der Optiken des Multiapertur-Projektionsdisplays angeordnet sind, ineinander überführbar sind.

6. Multiapertur-Projektionsdisplay gemäß einem der Ansprüche 1 bis 4, bei dem, für jeden Projektionskanal, der jeweilige Einzelbilderzeuger eine Hintereinanderschaltung von Hinterleuchtung und Schattenmaske oder eine Vorderleuchtung und eine Reflektivmaske aufweist.

7. Multiapertur-Projektionsdisplay gemäß einem der Ansprüche 1 bis 5, bei dem die Projektionskanäle so ausgebildet sind, dass die projizierten Bilder, zu denen sich die Abbildungen der Einzelbilder der Projektionskanäle an den zumindest zwei unterschiedlichen Projektionsentfernungen überlagern, reelle Bilder sind, oder die Projektionskanäle so ausgebildet sind, dass die projizierten Bilder, zu denen sich die Abbildungen der Einzelbilder der Projektionskanäle an den zumindest zwei unterschiedlichen Projektionsentfernungen überlagern, virtuelle Bilder sind.

8. Verfahren zur Einzelbilderzeugung für ein Multiapertur-Projektionsdisplay mit einer Mehrzahl von lateral benachbarten Projektionskanälen mit jeweils einem Einzelbilderzeuger zum Erzeugen eines jeweiligen Einzelbildes und einer Optik zum Abbilden des jeweiligen sich in einer Objektebene der Optik befindlichen Einzelbildes in eine Projektionsrichtung des Multiapertur-Projektionsdisplays, wobei die Einzelbilder der Projektionskanäle derart ausgebildet sind, dass sich die Abbildungen der Einzelbilder der Projektionskanäle an zumindest zwei unterschiedlichen Projektionsentfernungen zu jeweils einem projizierten Bild überlagern, wobei die Einzelbilder bei einer Rückprojektion über die Optiken der Projektionskanäle in die Objektebene der Optiken der Projektionskanäle nicht-null-wertige Abschnitte aufweisen, die sich zu einem gewissen Teil überlappen, wobei an denjenigen Stellen, an denen zumindest von einem der rückprojizierten Bilder ein nicht-null-wertiger Abschnitt liegt und an denen sich die nicht-null-wertigen Abschnitte der rückprojizierten Bilder nicht überlappen, die Einzelbilder der Einzelbilderzeuger abgedunkelt sind, und zwar abgedunkelt gegenüber einer positiven Überlagerung, und wobei außerdem ebendiese nicht-null-wertigen Abschnitte dort mehr abgedunkelt sind als an anderen Stellen, an denen sich die nicht-null-wertigen Abschnitte der rückprojizierten Bilder überlagern.

9. Herstellungsverfahren mit einem Verfahren zur Einzelbilderzeugung gemäß Anspruch 8 und einer Herstellung eines Arrays von optischen Masken derart, dass sie den gemäß Anspruch 8 erzeugten endgültigen Einzelbildern entsprechen.

10. Computerprogramm mit einem Programmcode zur Durchführung des Verfahrens nach Anspruch 8, wenn das Programm auf einem Computer abläuft.

**Claims**

1. Multi-aperture projection display comprising a plurality of laterally adjacent projection channels (12), comprising one single-image generator (14) in each case for generating a respective single image (30) and optics (16) for mapping the respective single image, which lies within an object plane (42) of the optics, into a projection direction (18) of the multi-aperture projection display,
   wherein the single images of the projection channels are implemented such that the mappings of the single images of the projection channels superpose one another at at least two different projection distances to form one respective projected image (38, 40) in each case,
   wherein the single images, when back-projected via the optics of the projection channels into the object plane (42) of the optics of the projection channels, comprise non-zero-valued portions superpose one another to a certain extent, wherein at those locations where there is a non-zero-valued portion of at least one of the back-projected images (38, 40) and where the non-zero-valued portions of the back-projected images (38, 40) do not superpose one another, the single images (30) of the single-image generators (14) are darkened, specifically darkened with respect to positive superposition, and
   wherein, in addition, said very non-zero-valued portions are darkened more at said locations than at other locations where the non-zero-valued portions (44) of the back-projected images (38, 40) superpose one another.

2. Multi-aperture projection display as claimed in claim 1, wherein a maximum of a differential amount between the at least two different projection distances is greater than $\dfrac{2DL^2\beta}{D^2 - L^2\beta^2}$, wherein D is an expansion across which all optics of the projection channel extend, L is an average value of the different projection distances and $\beta=0.005$.

3. Multi-aperture projection display as claimed in claim 1 or 2, wherein the single-image generator (14) is implemented such that, for each of the plurality of projection channels, the single image (30) is binary.

4. Multi-aperture projection display as claimed in claim 3, wherein the single-image generator (14) is implemented such that the projected images (38, 40) are binary at the different projection distances, and for each of the plurality of projection channels, the single image represents a logic AND- or OR-operation of back projections of the projected images at the different projection distances via the optics of the respective projection channels onto the object plane of the optics of the respective projection channel.

5. Multi-aperture projection display as claimed in any of claims 1 to 4, wherein the single-image generator is implemented such that the projected images can be converted into one another at the different projection distances by centric projection onto an intersection between an optical axis (34) of the multi-aperture projection display and a plane where the entrance pupils (28) of the optics of the multi-aperture projection display are arranged.

6. Multi-aperture projection display as claimed in any of claims 1 to 4, wherein for each projection channel the respective single-image generator comprises a series connection of backlighting and shadow mask or a front lighting and a reflective mask.

7. Multi-aperture projection display as claimed in any of claims 1 to 5, wherein the projection channels are implemented such that the projected images to which the mappings of the single images of the projection channels superpose one another at the at least two different projection distances are real images, or the projection channels are implemented such that the projected images to which the mappings of the single images of the projection channels superpose one another at the at least two different projection distances are virtual images.

8. Method for single-image generation for a multi-aperture projection display comprising a plurality of laterally adjacent projection channels, comprising one single-image generator in each case for generating a respective single image and optics for mapping the respective single image, which lies within an object plane of the optics, into a projection direction of the multi-aperture projection display, wherein the single images of the projection channels are implemented such that the mappings of the single images of the projection channels superpose one another at at least two different projection distances to form one respective projected image in each case, wherein the single images, when back-projected via the optics of the projection channels into the object plane of the optics of the projection channels, comprise non-zero-valued portions which partly superpose one another, wherein at those locations where there is a non-zero-valued portion of at least one of the back-projected images and where the non-zero-valued portions of the back-projected images do not superpose one another, the single images of the single-image generators are darkened, specifically darkened with respect to positive superposition, and wherein, in addition, said very non-zero-valued portions are darkened more at said locations than at other locations where the non-zero-valued portions of the back-projected images superpose one another.

9. Production method with a method for single-image generation as claimed in claim 8 and a production of an array of optical masks such that same correspond to the final single images generated in accordance with Fig. 8.

10. Computer program having a program code for performing the method as claimed in claim 8 when the program runs on a computer.


**Revendications**

1. Ecran de projection à ouvertures multiples avec une pluralité de canaux de projection latéralement adjacents (12) avec

   respectivement un générateur d'image individuelle (14) destiné à générer une image individuelle respective (30) et une optique (16) destinée à reproduire l'image individuelle respective située dans un plan d'objet (42) de l'optique dans une direction de projection (18) de l'écran de projection à ouvertures multiples,
   dans lequel les images individuelles des canaux de projection sont conçues de sorte que les reproductions des images individuelles des canaux de projection viennent en chevauchement à au moins deux distances de projection différentes pour former une image projetée (38, 40),
   dans lequel les images individuelles présentent, en cas de projection rétroactive à travers les optiques des canaux de projection dans le plan d'objet (42) des optiques des canaux de projection, des segments de valeur différente de zéro qui viennent en chevauchement dans une certaine proportion,
   dans lequel, aux endroits auxquels se trouve au moins un segment de valeur différente de zéro d'au moins une des images projetées de manière rétroactive (38, 40) et auxquels les segments de valeur différente de zéro des images projetées de manière rétroactive (38, 40) ne se chevauchent pas, les images individuelles (30) des générateurs d'image individuelle (14) sont obscurcies, et ce obscurcies par rapport à une superposition positive, et
   dans lequel par ailleurs précisément ces segments de valeur différente de zéro y sont plus obscurcis qu'à d'autres endroits auxquels se chevauchent les segments de valeur différente de zéro (44) des images projetées de manière rétroactive (38, 40).

2. Ecran de projection à ouvertures multiples selon la revendication 1, dans lequel un maximum d'une quantité de différence entre les au moins deux distances de projection différentes est supérieur à $\frac{2DL^2\beta}{D^2-L^2\beta^2}$, où D est une extension sur laquelle s'étendent toutes les optiques des canaux de projection, L est une valeur moyenne des différentes distances de projection et $\beta = 0{,}005$.

3. Ecran de projection à ouvertures multiples selon la revendication 1 ou 2, dans lequel le générateur d'image individuelle (14) est conçu de sorte que, pour chacun de la pluralité de canaux de projection, l'image individuelle (30) soit d'une valeur binaire.

4. Ecran de projection à ouvertures multiples selon la revendication 3, dans lequel le générateur d'image individuelle (14) est conçu de sorte que les images projetées (38, 40) soient, aux différentes distances de projection, d'une valeur binaire et que, pour chacun de la pluralité de canaux de projection, l'image individuelle représente un couplage ET ou OU logique de projections rétroactives des images projetées aux différentes distances de projection à travers l'optique du canal de projection respectif sur le plan d'objet de l'optique du canal de projection respectif.

5. Ecran de projection à ouvertures multiples selon l'une des revendications 1 à 4, dans lequel le générateur d'image individuelle est conçu de sorte que les images projetées puissent, aux différentes distances de projection, passer de l'une à l'autre par une projection centrale sur une intersection entre un axe optique (34) de l'écran de projection à ouvertures multiples et un plan dans lequel sont disposées les pupilles d'entrée (28) de l'optique de l'écran de projection à ouvertures multiples.

6. Ecran de projection à ouvertures multiples selon l'une des revendications 1 à 4, dans lequel, pour chaque canal de projection, le générateur d'image individuelle respectif présente une connexion en série d'éclairage de l'arrière et de masque d'ombre ou de d'éclairage de l'avant et de masque réfléchissant.

7. Ecran de projection à ouvertures multiples selon l'une des revendications 1 à 5, dans lequel les canaux de projection sont conçus de sorte que les images projetées formées par les reproductions des images individuelles des canaux de projection qui se chevauchent aux au moins deux distances de projection différentes soient des images réelles, ou les canaux de projection sont conçus de sorte que les images projetées formées par les reproductions des images individuelles des canaux de projection qui se chevauchent aux au moins deux distances de projection différentes soient des images virtuelles.

8. Procédé pour générer des images individuelles pour un écran de projection à ouvertures multiples avec une pluralité de canaux de projection latéralement adjacents avec respectivement un générateur d'image individuelle destiné à générer une image individuelle respective et une optique destinée à reproduire l'image individuelle respective située dans un plan d'objet de l'optique dans une direction de projection de l'écran de projection à ouvertures multiples, dans lequel les images individuelles des canaux de projection sont conçues de sorte que les reproductions des images individuelles des canaux de projection viennent en chevauchement à au moins deux distances de projection différentes pour former une image projetée, dans lequel les images individuelles présentent, en cas de projection rétroactive à travers les optiques des canaux de projection dans le plan d'objet des optiques des canaux de projection, des segments de valeur différente de zéro qui viennent en chevauchement dans une certaine proportion, dans lequel, aux endroits auxquels se trouve au moins un segment de valeur différente de zéro d'au moins une des images projetées de manière rétroactive et auxquels les segments de valeur différente de zéro des images projetées de manière rétroactive ne se chevauchent pas, les images individuelles des générateurs d'image individuelle sont obscurcies, et ce obscurcies par rapport à une superposition positive, et dans lequel par ailleurs précisément ces segments de valeur différente de zéro y sont plus obscurcis qu'à d'autres endroits auxquels se chevauchent les segments de valeur différente de zéro des images projetées de manière rétroactive.

9. Procédé de fabrication avec un procédé de génération d'images individuelles selon la revendication 8 et une production d'un réseau de masques optiques de sorte qu'ils correspondent aux images individuelles finales générées selon la revendication 8.

10. Programme d'ordinateur avec un code de programme pour réaliser le procédé selon la revendication 8 lorsque le programme est exécuté sur un ordinateur.

FIG 1

FIG 2

FIG 3

EP 3 007 439 B1

FIG 4A

FIG 4B

FIG 4C

FIG 4D

FIG 4E

FIG 5

FIG 6

FIG 7

Distanz: 400mm       533mm       800mm

FIG 8

EP 3 007 439 B1

FIG 9

<u>80</u>

84

| Bilddateneingang | 82 |

| Einzelbildberechner | 86 |

| Kombinierer | 88 |

| Einzelbilderzeugung (z.B. Maskenhersteller) | 90 |

FIG 10

FIG 11

FIG 12

FIG 13

EP 3 007 439 B1

FIG 14

FIG 15

FIG 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20120256824 A1
- DE 102009024894 A1
- DE 102011076083 A1

### In der Beschreibung aufgeführte Nicht-Patentliteratur

- **W.J. SMITH.** Modern Optical Engineering. Mc-Graw-Hill, 2007
- **MARCEL SIELER ; PETER SCHREIBER ; PETER DANNBERG ; ANDREAS BRÄUER ; ANDREAS TÜNNERMANN.** Ultraslim fixed pattern projectors with inherent homogenization of illumination. *Appl. Opt.,* 2012, vol. 51, 64-74